# EUROPEAN PATENT APPLICATION

(11) **EP 4 510 680 A1**
(43) Date of publication of application: **19.02.2025**
(21) Application number: 24189557.2
(22) Date of filing: 18.07.2024
(51) Int. Cl.: H04W 24/02

(54) **NETWORK OPTIMIZATION AND POSITIONING TECHNIQUES FOR 5G BACKHAUL**

(30) Priority: 14.08.2023 US 202363532521 P; 03.11.2023 US 202363547273 P; 21.02.2024 US 202418583609
(71) Applicant: INTEL Corporation, Santa Clara, CA 95054 (US)
(72) Inventor: PALERMO, Stephen T., Chandler, AZ 85226 (US); PARKER, Valerie J., Portland, 97229 (US); GUPTA, Vishal, San Diego, 92130 (US); CONNOR, Patrick L., Beaverton, 97007 (US)
(74) Representative: Maiwald GmbH

(57) **Abstract**

Various approaches for the deployment and coordination of network operation processing, communications, and mobile device positioning, in connection with backhaul of a radio access network (RAN), are disclosed. An example method of operation of backhaul communications used with a radio access network (RAN) includes: obtaining measurements corresponding to wireless communications of a radio access network (RAN) operating with a backhaul, the measurements based on in-phase and quadrature (IQ) data of the wireless communications; performing a comparison of the measurements to an expected operational state of the RAN, with the expected operational state being established from a baseline of the IQ data collected in the RAN; and modifying the wireless communications of the backhaul based on the comparison of the measurements to the expected operational state.

## Description

### PRIORITY CLAIM

This application claims the benefit of priority to: United States Provisional Patent Application No. 63/532,521, filed August 14, 2023, and titled "AI-ENABLED 5G INTEGRATED ACCESS BACKHAUL (IAB) REGENERATIVE SPECTRUM PARTITIONING"; and United States Provisional Patent Application No. 63/547,273, filed November 3, 2023, and titled "SELF-BACKHAUL vRAN NODE WITH AI-EDGE ENABLED PRECISE POSITIONING"; both of which are incorporated herein by reference in their entirety.

### BACKGROUND

Various approaches are being investigated for 5G New Radio (5GNR) backhaul, including ways to deliver sufficient backhaul high capacity related to small cells. 5GNR gNBs require backhaul in the Gbps, as backhaul is established from the gNB or cell tower toward the 5G core network (CN). Some implementations to remote locations have proposed use of fiber, point-to-point microwave, even satellite backhaul in order to connect additional nodes.

5G promises network densification, and 5G NR includes more bands than previous wireless network standards to transmit data. However, higher bandwidth (especially mmWave) propagation causes higher path loss, so more 5G deployments has led to the need for more Base Stations (BS) operating as gNBs. A BS may be connected to the 5G CN through a physical media connection (e.g., wired or fiber); however, not all BSs can be reached with physical media connections because of location and trenching costs, or because the BSs will be located in remote or temporary areas.

Based on these and other real-world constraints, the 3rd Generation Partnership Project (3GPP) has proposed the use of wireless Integrated Access Backhaul (IAB) via nodes that use wireless backhaul instead of fiber. Some implementations of IAB, for example, use the same access frequencies (e.g., FR1/FR2 frequencies) for wireless backhaul to connect BSs. 3GPP, in Release 18, has also introduced the concept of mobile integrated access and backhaul (mIAB) nodes, to enable the use of IAB nodes on-demand at mobile locations.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 provides an overview of network connectivity using Integrated Access Backhaul (IAB) nodes and donors, according to an example;
FIGS. 2A and 2B depict architectures corresponding to the use of IAB Nodes and Donors, according to respective examples;
FIGS. 3A and 3B depict a protocol stack used in IAB Nodes, according to respective examples;
FIG. 4 depicts scenarios of IAB Nodes for 5G connectivity, according to an example;
FIG. 5 depicts an approach for using artificial intelligence (AI) including a collection of data and measurements for an AI Training and Learning functional framework, according to an example;
FIGS. 6A to 6G depict respective flowcharts of scenarios for the analysis and adjustment of IAB radio communications, according to respective examples;
FIG. 7 depicts a donor/node configuration and a gNB configuration for UE positioning, according to an example;
FIG. 8 depicts an architecture used for providing TDD patterns, including UE location functionality operating on a respective node, according to an example;
FIG. 9 depicts a flowchart of techniques for determining and adjusting TDD patterns, in connection with UE location functionality, according to an example;
FIGS. 10A, 10B, and 10C depict scenarios of UE and radio unit (RU) connectivity, according to respective examples;
FIG. 11 depicts a configuration of a vRAN node to perform operations for UE location functionality, based on a sounding reference signal (SRS) and Time of Arrival (TOA) calculation, according to an example;
FIG. 12 depicts a flowchart of an example method for optimization of backhaul communications used with a radio access network (RAN), according to an example;
FIGS. 13A, 13B, and 13C depict additional architecture details of IAB configurations, according to respective examples;
FIG. 14 depicts an 3GPP IAB reference architecture with two backhaul hops, when connected to a 5G Core, according to an example;
FIG. 15 depicts a flowchart of an example workflow for collection of IQ fingerprint data, according to an example;
FIG. 16 depicts a flowchart of an example workflow for analysis of IQ fingerprint data, according to an example;
FIG. 17 depicts a flowchart of an example method for implementing and operating a vRAN based on IQ fingerprint data;
FIG. 18 illustrates an overview of an edge cloud configuration for edge computing, according to an example;
FIG. 19 illustrates an overview of layers of distributed compute deployed among an edge computing system, according to an example;
FIG. 20 illustrates operational layers among endpoints, an edge cloud, and cloud computing environments, according to an example;
FIG. 21 illustrates an example approach for networking and services in an edge computing system, according to an example;
FIG. 22A illustrates an overview of example components deployed at a compute node system, according to an example;
FIG. 22B illustrates a further overview of example components within a computing device, according to an example; and
FIG. 23 illustrates a software distribution platform to distribute software instructions and derivatives, according to an example.

### OVERVIEW

The following discusses technical challenges encountered with 5G New Radio (5G NR) communications technologies. The following provides approaches for maintaining and monitoring critical 5G NR communications, especially in Private 5G network cells that are extended temporarily. Among other settings, Private 5G network cells may be temporarily deployed to increase network capacity, including in emergency, disaster, failure remediation, network overload, bandwidth augmentation, or rapid deployment settings, at sports arenas, large cities, or large-scale public events, or in connection with other situations that necessitate extra capacity or mobility. In such contexts, a wireless backhaul may provide an important replacement to (or addition to) the use of a physical media connection.

The following configurations and techniques are applicable to a variety of 5G network settings and use cases. These use cases include user equipment (UE) connected to self-backhauling wireless Base Stations (e.g., IAB-Nodes) and temporary virtualized radio access network (vRAN) systems. These use cases also include networks that perform communications using mmWave band self-backhauling IAB-Nodes, where the higher frequency transmission rates are challenged due to short propagation lengths and path loss susceptibility.

A first aspect discusses techniques and configurations that provide a self-backhauling wireless Base Station, operating as a vRAN Node (e.g., an IAB Node). A vRAN Node may set, and then adjust, uplink TDD Patterns, to enable robust backhaul connectivity between a backhaul Donor and a Node.

A second aspect discusses techniques and configurations that provide a precise positioning of UEs, including in hyper-localized ephemeral self-backhauling vRAN Node deployments. This vRAN Node may be configured to allow frequent location measurements of monitored 5G devices and UEs attached to a vRAN Node (e.g., an IAB Node). The aforementioned TDD Patterns may be adapted to enable or improve frequent location measurements of monitored 5G devices and UEs attached to the vRAN Node.

A third aspect discusses techniques and configurations that provide adaptive network calibration, measurement, and integrity checking, via the use of a RU Positioning Reference Unit (a "PRU", used for calibration) and a Fingerprint Reference Unit (a "FRU", used for integrity monitoring) at the edge of a network. This may include the use of AI-assisted techniques for changing TDD patterns, determining UE location information, monitoring for congestion, adjusting a component of the network, or some combination. These techniques and configurations are thus directed at improving the operation and reliability of a network, including in a variety of settings where IAB-Nodes or temporary vRAN nodes (fixed or mobile) are set up and deployed.

A fourth aspect discusses techniques and configurations involving adapting continuous service to UEs connected to self-backhauling wireless Base Stations (e.g., IAB-Nodes) to mitigate interference, scheduling constraints, and channel state health. IAB-Nodes can be fixed or mobile, using FR1/2 for wireless backhaul and access. An AI model may be used to train and create a learning model that identifies and remedies service disruption caused by interference, channel and multi-pass interference, and or scheduling constraints.

Accordingly, the following addresses a variety of technical challenges with 5GNR backhaul. IAB or self-backhaul uses the 5GNR architecture to connect UEs to a cell while providing backhaul to the core network and or other IAB Nodes or an IAB Donor. Thus, IAB enables multi-hop backhauling using the same frequencies employed for user equipment (UE) access or distinct, dedicated, frequencies. Accordingly, a UE operating with the present architectures may operate as a UE (for communication), as a PRU (for calibration), or as an FRU (for integrity).

The following sections provide additional context on the type of network configurations and data that can be monitored, including but not limited to the use of IAB deployments. This is followed by examples of self-backhaul vRAN configurations and capabilities, and frameworks to detect and respond to abnormal conditions in a 5G network. This is also followed by examples of positioning techniques usable in IAB deployments and other self-backhaul vRAN configurations. A detailed discussion of these techniques and capabilities is provided after an introduction of IAB networking and connectivity.

### Overview of Integrated Access Backhaul

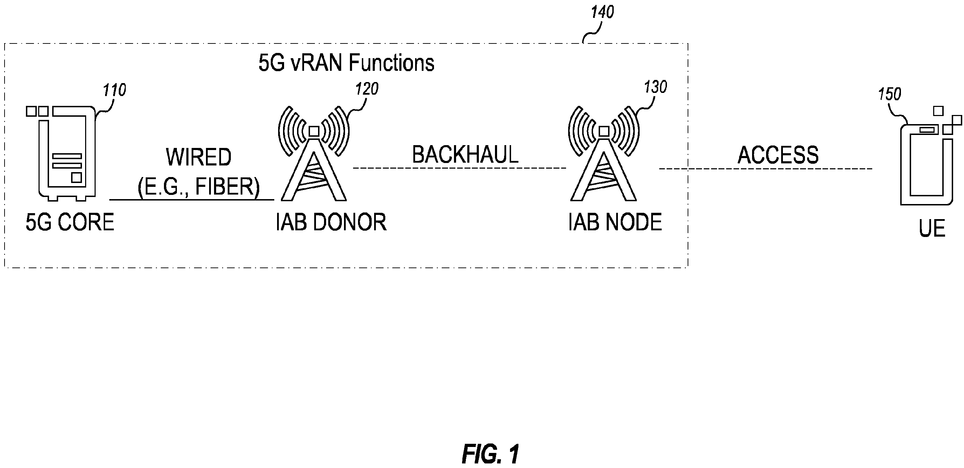

FIG. 1 provides an overview of network connectivity using one or more IAB Nodes and Donors. In many settings, an IAB Donor is defined to have a wired or fiber backhaul whereas IAB Nodes have no fiber; instead, the IAB Nodes use FR1 or FR2 5G frequencies to backhaul traffic. As the name suggests, IAB is integrated and supports direct UE connections as well as wireless backhaul. In a typical configuration, an IAB Donor can serve IAB Nodes, and the IAB Nodes in turn can serve other IAB Nodes.

Terrestrial IAB was introduced in 3GPP Rel 16 using the Backhaul Access Protocol (BAP, as defined in 3GPP TS 38.340). A respective IAB Node is considered a child of either an IAB Donor or an IAB Node. An IAB Node can then be a child of either another IAB Node or an IAB Donor. Each IAB Node child may introduce additional latency and consume the total backhaul bandwidth, and therefore the number of IAB Nodes may be limited to bandwidth and or latency constraints, although theoretically there are unlimited numbers of hops.

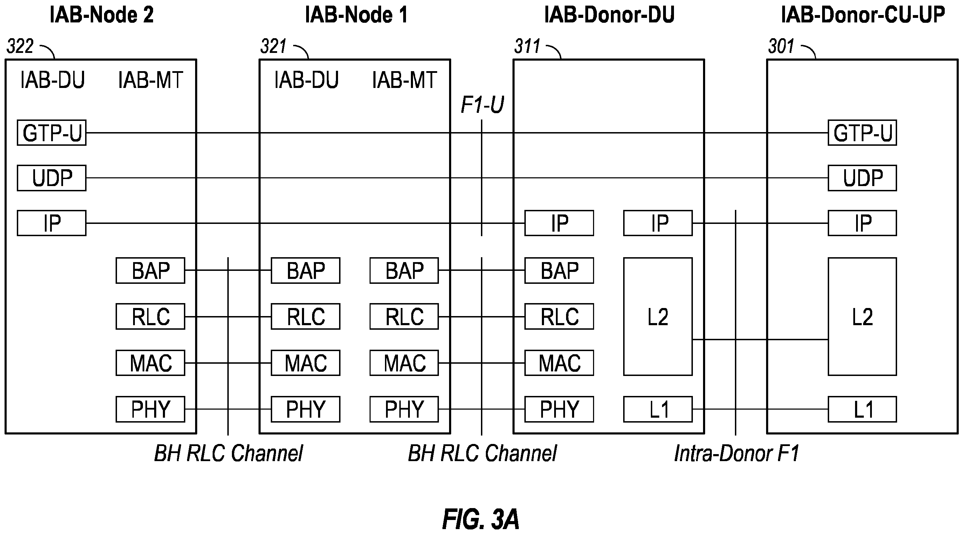

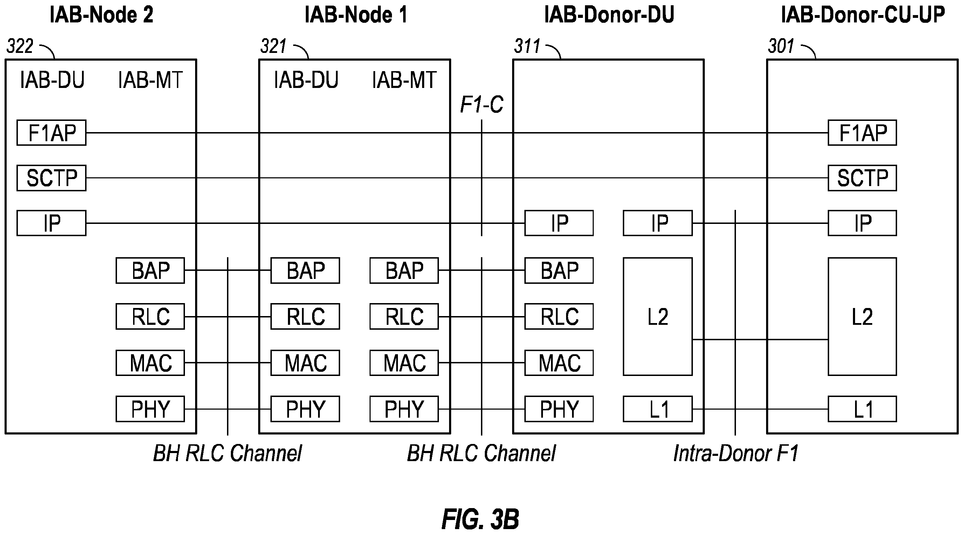

FIG. 1 depicts a 5G Core 110 that utilizes a wired link (e.g., fiber or copper network) to an IAB Donor 120, and an IAB Donor 120 that uses a wireless backhaul to an IAB Node 130. This IAB Node 130 may be deployed at any number of locations or settings, to directly or indirectly provide access to a UE 150 (and other UEs not shown). A 5G virtualized radio access network (vRAN) is provided using vRAN functions 140 distributed among the 5G Core 110, the IAB Donor 120, and the IAB Node 130. The 5G Core 110, IAB Donor 120, and IAB Node 130 include respective hardware platforms and components (not depicted) for the execution of vRAN functions 140 that operate Layer 1 (L1), Layer 2 (L2), and/or Layer 3 (L3) layers via a software-based RAN stack. Additional detail on the configuration of a centralized unit (CU) and distributed unit (DU) in a vRAN is depicted with reference to FIGS. 3A and 3B, discussed below.

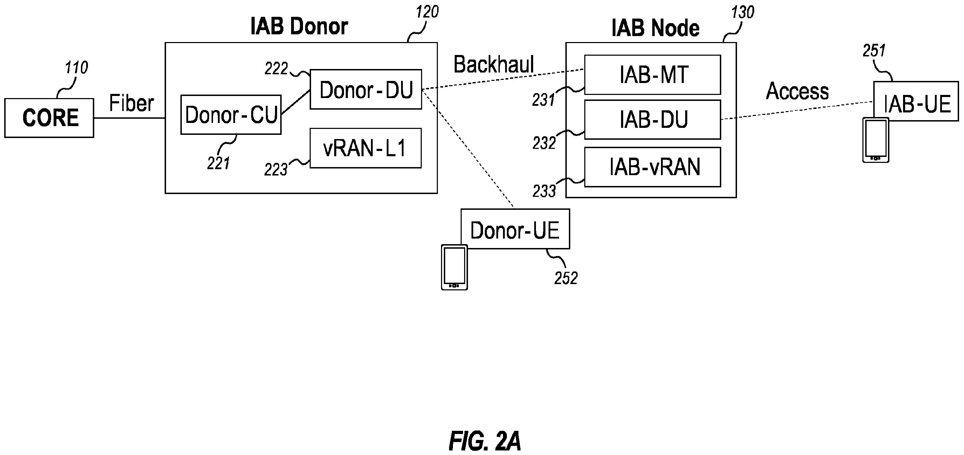

FIG. 2A depicts an architecture corresponding to the use of IAB nodes and donors. In an example, the IAB Donor 120 has a O-RAN 7.2 functional split using a CU for higher protocol tasks (e.g., authentication, etc.). The CU (e.g., Donor-CU 221), includes one or more DU(s) (e.g., Donor-DU 222) responsible for time-sensitive tasks such as scheduling. The IAB Donor 120 also performs vRAN-L1 functions 223 via the vRAN. One or more UEs may be directly connected to the IAB Donor 120, such as shown with Donor-UE 252.

An IAB Node 130 includes a mobile termination (MT) function, shown as IAB-MT 231, which is responsible for wireless backhaul transmissions and is connected to the Donor-DU 222. The IAB Node DU function, shown as IAB-DU 232, is responsible for access transmissions to UEs such as an IAB-UE 251 (and, if applicable, to provide access to other backhaul IAB Nodes that might be connected to the IAB Node 130). The IAB Node 130 also includes an IAB-vRAN 233 used for performing vRAN functions at the IAB Node 130. An individual IAB Node can also operate as a parent to other IAB Nodes that are also composed of an MT and a DU.

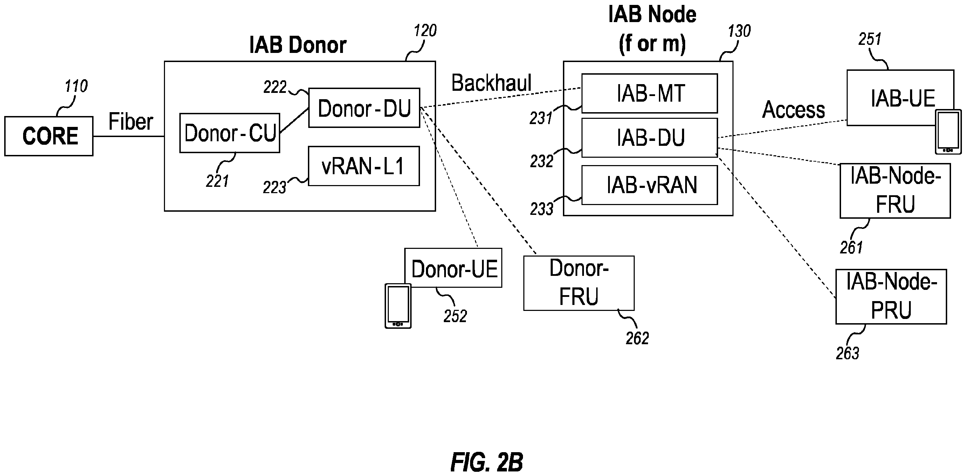

FIG. 2B depicts a variation to the architecture of FIG. 2A. This variation shows how the IAB Node 130 provides access to the IAB-UE 251 as well as an FRU (Fingerprint Reference Unit) identified as IAB-Node-FRU 261. The IAB Donor 120 likewise provides access to the Donor-UE 252 and a Donor-FRU 262. As discussed in the sections below, an FRU may be used to capture and monitor communication signals occurring at the vRAN node on a per-antenna or per-node basis. In other examples, a PRU (Positioning Reference Unit) such as IAB-Node-PRU 263 may be used in addition to the FRU, or in scenarios where FRUs are not used.

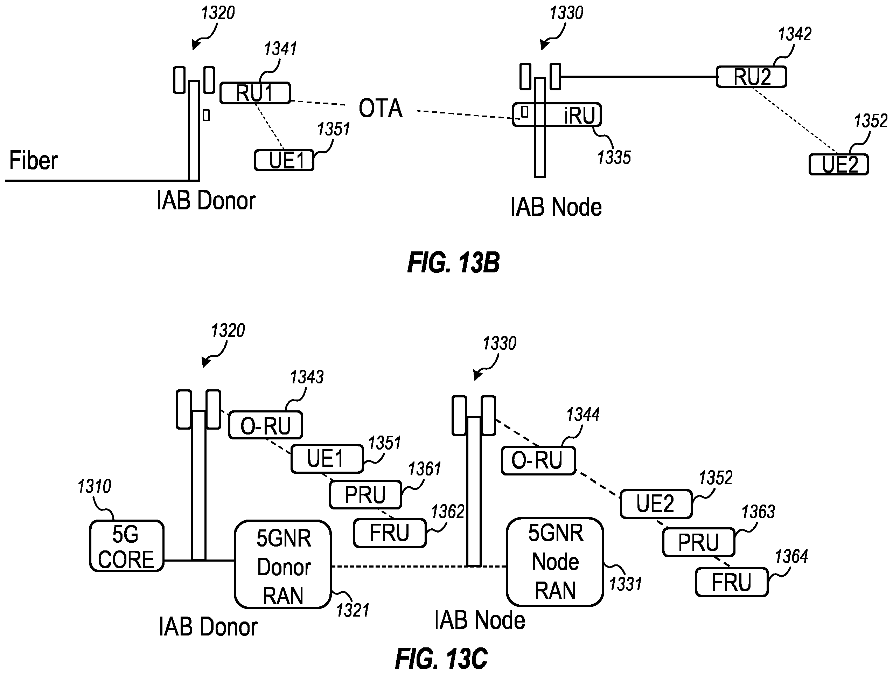

The evaluation of network activity via an FRU (e.g., at one or both of IAB-Node-FRU 261 and Donor-FRU 262, or other devices) is discussed in some of the architectures below, including with reference to FIG. 13C, FIG. 15, and FIG. 16. These and other examples refer to an implementation involving the use of a private or standalone 5G Network, supporting a dedicated FRU Device, and the use of this dedicated FRU device to transmit a reference signal (e.g., a Sounding Reference Signal (SRS)) for data measurements and comparisons. However, other network architecture variations and adaptations will also be apparent. For instance, although many of the following examples refer to a single dedicated FRU, other examples may be adapted to use multiple FRUs (connected to a respective Donor and/or Node). In such a multi-FRU scenario, a respective FRU can have a separate (and unique) fingerprint.

In various examples, a Node (MT) can operate as a PRU or a FRU without any other UEs connected to it. A UE can attach to a Node or a Donor (but not both). Additionally, a UE can be handed off to specific Nodes(s) or Donor(s) depending on RSRP/RSRQ/RANSTATS, as discussed in the examples below.

FIGS. 3A and 3B depict two IAB Nodes providing three hops from the IAB-donor to the UE, with these examples depicting F1-U and F1-C traffic carried over two backhaul hops. Specifically, FIG. 3A depicts the protocol stack for F1-U between an IAB-DU 311 and an IAB-Donor-CU-UP 301; and FIG. 3B depicts shows the protocol stack for F1-C between the IAB-DU 311 and the IAB-Donor-CU-UP 301. For L1 there are two options, in-band and out-of-band; in-band means there is overlap between the frequencies used for access and backhaul; out-of-band means there is no overlap between the access and backhaul frequencies. For L2 a respective hop of the packet is checked and retransmitted, if needed (e.g., different from the end-to-end check and retransmit transmission ARQ that happens at the RLC layer). The backhaul adaptation protocol (BAP) routes and forwards IP packets from the IAB donor to the UE and for the IAB Nodes (e.g., via IAB-Node 1 321, to IAB-Node 322, to a UE not shown).

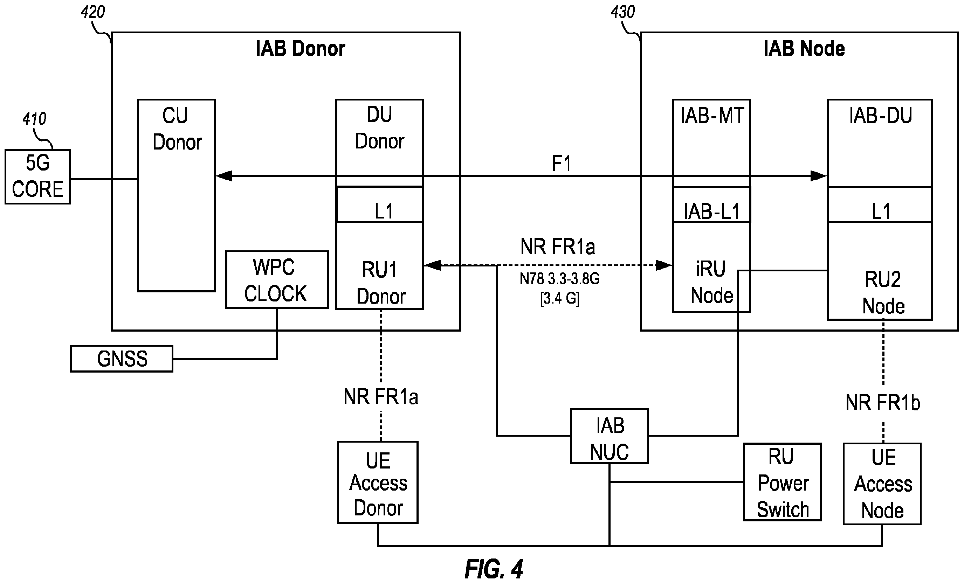

FIG. 4 depicts further scenarios of IAB Nodes for 5G connectivity. Here, FIG. 4 shows an architecture of a donor-node network arrangement, which may collect data and provide network connectivity using IAB as discussed herein. The IAB Donor 420 provides connectivity and control to the IAB Node 430, via F1 and NR FR1a interfaces.

In specific examples, data can be collected from the IAB architecture for AI model training or inferencing, including an AI model used for network interference measurement, condition detection, and/or analysis of fingerprint reference measurements. The data collected for AI model training can include: (1) joint training on data between a parent IAB-Donor and a child IAB-Node; (2) separate training on data from the parent IAB-Donor and a child IAB-Node, with the model used at one location being shared with the other location; or (3) either joint or separate training, using collaboration of data from a donor-UE and or an access-UE and or IAB-MT. Thus, it will be understood that AI Training / Learning can be performed at a Node toward Donor (backhaul) and/or Node toward UE (access). Further, there may be one:many donor:nodes. Further hardware configurations used for these options may include hardware and software circuitry (including CPU+memory and/or GPU+memory circuitry combinations) on an IAB Node and or IAB Donor (server).

### AI Framework and Methods for Backhaul Optimization

The following introduces approaches to dynamically determine and remedy IAB-Node to IAB-Donor communication issues caused by channel state issues, interference, and or physical and upper-layer transmission issues. One aspect of this approach includes addressing issues in the BAP and channel state conditions, applicable for backhaul or access nodes, and for fixed or mobile IAB-Nodes. Thus, in the following scenarios, a Wireless gNB/cell tower that self-adjusts its scheduling can perform better than a wired gNB/cell tower as measured from the Node toward UEs (access) and/or from the IAB Node toward the IAB Donor (backhaul).

The following adjustments may be based on UE/MT coverage; UE/MT bandwidth; or UE/MT latency. Accordingly, the following approaches apply to IAB nodes that are fixed or mobile; and as UEs (mobile devices) are attached/scheduled by the IAB Donor, IAB fixed node, IAB mobile node, or non-IAB macro cells. Among other examples, IAB mobile nodes located on a bus or other moving vehicle can schedule passengers (riding along in proximity of mobile node) and/or schedule bystanders (static UEs that come into proximity of a mobile node).

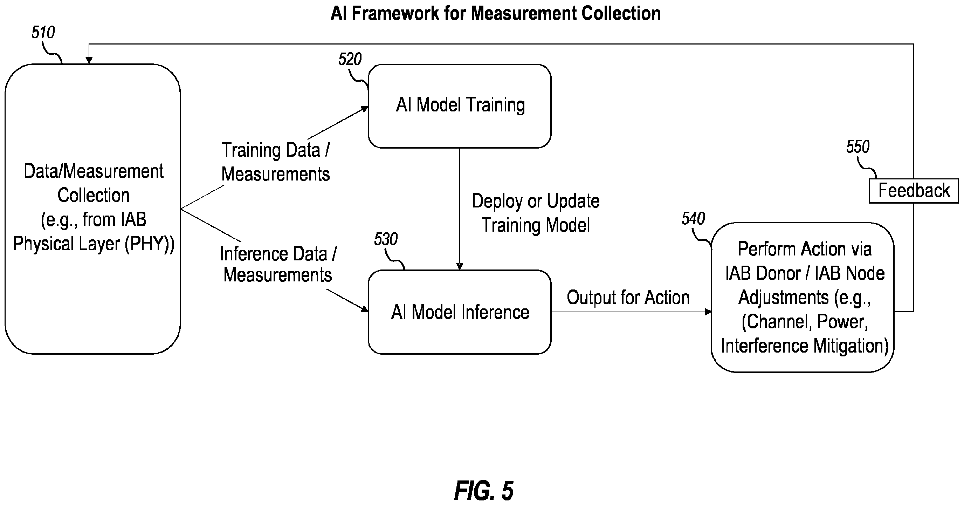

FIG. 5 depicts an approach for using Artificial Intelligence directed at the collection of data and measurements for a AI Training and Learning functional framework. Specifically, this approach shows how IAB physical layer (PHY) data and measurements are collected for use in training and inference scenarios. Other sources of data and measurements may be added to training and inference operations.

First, operation 510 shows a Data/Measurement collection (e.g., from the IAB physical layer (PHY)), with these data/measurements to provide input data for training operations 520 and inference operations 530. This input data may include but is not limited to IAB gNB PHY and UE data and measurements-such as channel state information, or responses from reference signals such as RSRP (Reference Signal Received Power) and RSRQ (Reference Signal Received Quality)-within the currently used channels. This input data may be based on communications from not only the frequency channel for the IAB backhaul or access communication, but also from other portions of the available bandwidth associated with numerology of the IAB Donor or Node (for example 100MHz for n78 numerology 1). Measurements from Physical layers can include 5G NR uplink Fingerprint Reference Signal (FRS) Responses or any other reference signals that could be used to derive measurements and detect the channel state information. Thus, measurements may also include or be based on power and/or amplitude-related responses (e.g., to detect signal strength and anomalies associated with over-the-air transmission).

These and similar measurements can be used as inputs to an AI Model (for training operations 520 or inference operations 530), or to trigger automated alerts and actions that cause adjustments in the network configuration (such as at operation 540). Feedback 550 that is collected from the performed action may also provide additional data measurements for additional training and inference.

Thus, the "IAB" Information Elements of the Node to/from Donor Backhaul and/or Node to/from UE Access can be captured in real-time and analyzed with the AI model. This may enable reference signal analysis, PHY stats analysis, power analysis, quality analysis, and backhaul access protocol analysis to be performed at a respective hop. Based on one or more of the analysis, actions may be implemented including to adjust Donor DU and/or Access DU scheduling changes (including TDD/FDD spectrum partitioning and or different patterns).

In this context, the "IAB" Information Elements can include but are not limited to a mixture of CU/DU related elements:
Bit Error Rate;
Noise Ratio;
Flux Density;
Antenna Gain;
RSRP (Indicates the value of reference signal [e.g., SRS] received power);
RSRQ (Indicates the value of reference signal [e.g., SRS] received quality);
SINR (Indicates the value of signal to interference plus noise ratio);
Packet stats; and
Handover stats;
Other measurement information used for training and inference/analysis may include counters, such as:
   Layer 1 (L1) Radio Resource Control (RRC), Protocol Data Unit (PDU), Data Radio Bearer (DRB), Quality of Service (QoS), Guaranteed Bit Rate (GBR) related counters, including both user equipment (UE) and mobile termination (MT) connections successfully made, attempted or rejected, re-establishments, handover attempt releases, and establishment times to/from a gNB Donor and/or to/from IAB-Node(s) toward the gNB Donor and/or toward UE(s));
   Layer 2 (L2) Media Access Control (MAC)-related RACH counters including UL and DL Channel Quality Indicator (CQI) and Quadrature Amplitude Modulation (QAM) transportation blocks attempted, rejected, and successful to/from gNB Donor and/or to/from IAB-Node(s) toward the gNB Donor and/or toward UE(s); and
   Layer 3 (L3) IP Packet Throughput-related counters including MT and UE throughput statistics, blocks attempted/rejected/successful to/from gNB Donor and/or to/from IAB-Node(s) toward the gNB Donor and or toward UE(s); and
   Non-Terrestrial (Satellite)-related counters and statistics including Non-Terrestrial Networks (NTN) parameters required for the UE to access a Donor gNB and or IAB-DU through an NTN. In specific examples, NTN measurements may include or relate to any of the following: debris; downlink data bandwidth; radio frequency interference (RFI); ground station coverage; government (e.g., FCC) restrictions; natural (solar, ionospheric) interference; attitude changes (e.g., in LEO constellations) that impact antenna gain, RF received power, or Effective Isotropic Radiated Power; LEO constellation hardware/silicon specification deviations that affect the amount of power a satellite has in real-time to adjust antenna power, ground station low noise amplification, satellite altitude and line of sight to ground station, or dipole / phased array antenna gains; Bit Error Rate; Carrier to Noise Ratio; Flux Density; Received Isotropic Power (RIP); Effective Isotropic Radiated Power (EIRP); Antenna Gain; or Proximity constraints (e.g., a fly-by exclusion or coordination zone).

AI Training / Learning can be performed at the IAB Node toward the IAB Donor (backhaul) and/or at the IAB Node toward the UE (access). AI Training Data/Measurements can also include other types of upper-layer network measurements and statistics including packets transmitted, packets dropped, packets retransmitted, dropped calls, number of handovers, and the like. Additionally, BAP hop-to-hop packets that are determined at a respective hop (instead of end-to-end) may provide useful information.

In still further examples, AI Training Data/Measurements can also be related to interference detection metrics. Counters (including the counters identified above) may be used as part of AI Inferencing and Learning/Training, including to reinforce actual data collected for training.

An AI Model Inference task may be created based on the output data received by the IAB Donor/Node Actor, to cause actions and implement load balancing adjustments that improve IAB Nodes and connected UEs. IAB nodes that perform load balancing can be actioned by changing TDD patterns, changing beam direction based on active, changing RX/TX power on the IAB-DU Node, IAB-DU/CU Donor, and or both. Other variations of TDD/FDD changes and adaptations may also be used.

TDD-UL-DL-Config information elements (IEs) can be used to determine an Uplink/Downlink TDD configuration. TDD is used for both UL and DL because it is separated in time domain (e.g., one reference signal does both UL and DL), whereas with an FDD approach the UL and DL frequencies are different (and separate reference signals are used to sound the difference frequencies). Both UE- and cell-specific IEs may be in use; additionally, the IAB-MT, TDD-UL-DL-Config formats may be set in a static, semi-static, or fully dynamic fashion.

The configuration for a slot format can be broadcast from SIB1 or/and configured with an RRC Connection Reconfiguration message. The configuration of Static and semi-static for a slot can be performed using RRC, while a dynamic slot configuration can be performed using PDCCH DCI.

Additionally, AI Model execution and placement can occur with (but is not limited to) a specific IAB-Node (hop) or on multiple/all IAB-Nodes (hops), executed using processing circuitry (e.g., at least one CPU and/or GPU).

BAP-related data and measurements also can be defined in 3GPP standards or specifications. Such definitions can standardize the signaling and models for broad adoption and interoperability that requires a standardized framework, including for over-the-air IAB backhaul and access enhancements that provide AI/ML interference/load balancing type algorithms. As noted above, AI training model options can include (1) joint training between a parent IAB-Donor and a child IAB-Node; or (2) separate training at the parent IAB-Donor and a child IAB-Node, with the model from a respective entity being shared with the other; or (3) either joint training or separate training with collaboration from a donor-UE and or an access-UE and or IAB-MT.

An example of AI Model Training and Inference for the entire set of IAB-Nodes, group of served IAB-Node UEs, and/or specific UEs served by an IAB Node may be the adjustment of TDD SRS CSI (channel state information) on the OTA interface. SRS reference signals can be transmitted from the UE to the IAB-Node over the access frequency or SRS reference signals can be transmitted between the IAB-MT to the IAB-Donor. The SRS Reference (original) signal can be compared with the SRS Response (resulting) signal to assess the CSI in both the active transmission channel and the non-active transmission channels in the available bandwidth for the specific FR1/2 numerology used for the specific Sub Carrier (SCS) frequency.

Once a UE (e.g., operating as a UE, FRU, or PRU) is attached to a Node, separate backhaul channels are created for each (UE, FRU, PDU) set of UL SRS Response data, associated with the same BAP (Backhaul Adaptation Protocol) Address. For example, there could be many backhaul channels containing control (F 1-C) and data (F 1-U) between the Donor and the Node. The BAP address is used to match the routing between and among the Node(s) that are connected to a Donor. The separate backhaul channel(s) use F 1-U protocol (User Plane data) and contain the UL SRS Response data from the UE/FRU/PRU to the ME (Measurement Engine). For example, Backhaul channels might be arranged as follows: Item4=F 1-U UE SRS UL; Item5=F 1-U PRU SRS UL; Item6=F 1-U FRU. The backhaul channels are called BH_UE#_UL_SRS_RESPONSE, BH_PRU#_UL_SRS_RESPONSE, BH_FRU#_UL_SRS_RESPONSE.

In various examples, there may be more than one BH channel for multiple UEs, multiple PRUs, and multiple FRUs. However, one FRU, one PRU, and one or more UEs may be arranged to keep UL traffic to a minimum-as to not impact communications.

### Backhaul Communication Adaptation Based on Network Conditions

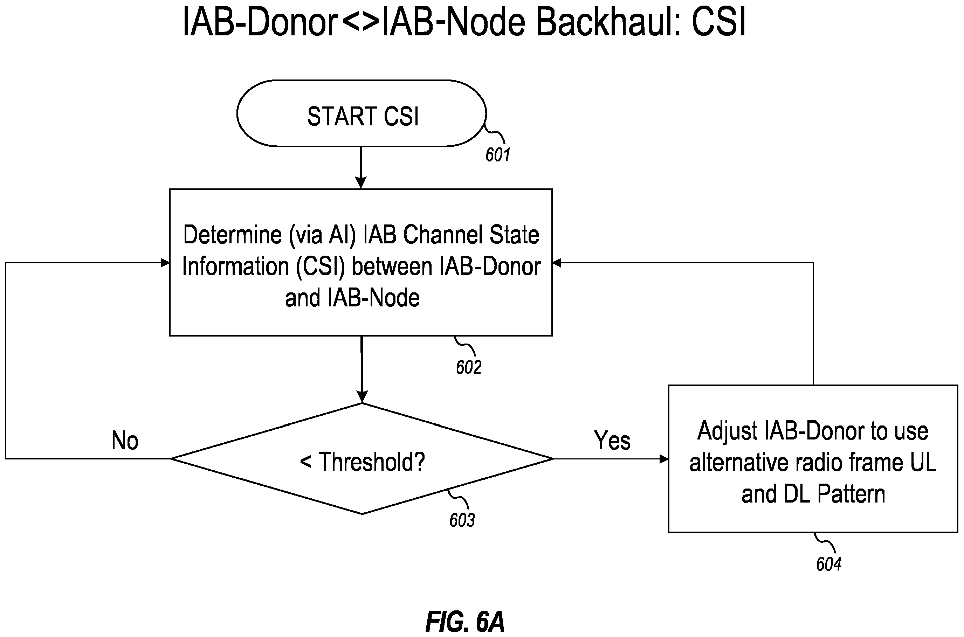

FIGS. 6A to 6G depict flowcharts of approaches for determining IAB information and making adjustments based on respective conditions. For example, an adjustment of an IAB-Donor to use an alternative radio frame Pattern (for FR1 numerology 1) is shown below for a 7DS2U TDD Pattern. Here, the IAB-Donor is not transmitting ("0" value) in certain slots to avoid interference. This is shown with the following table:

**TABLE 1**

| MACRO | | | IAB | Donor>MT | MT>Donor | Node>UE |
|---|---|---|---|---|---|---|
| Slot | 7DS2U | | Slot | Donor | Backhaul | Node |
| 1 | D | | 1 | D | D | 0 |
| 2 | D | | 2 | D | D | 0 |
| 3 | D | | 3 | D | D | 0 |
| 4 | S | | 4 | 0 | U | D |
| 5 | U | | 5 | U | 0 | U |
| 6 | U | | 6 | U | 0 | U |
| 7 | D | | 7 | D | D | 0 |
| 8 | S | | 8 | 0 | U | D |
| 9 | U | | 9 | U | 0 | U |
| 10 | U | | 10 | U | 0 | U |

Additional radio frame patterns are available and are typically established for multiple types of frequency bands, such as the patterns used below for 5GNR n78. (Other bands such as unlicensed CBRS n48, for example, will be different).

**TABLE 2**

| Slot | 7DS2U | DDDSU | SU |
|---|---|---|---|
| 1 | D | D | S |
| 2 | D | D | U |
| 3 | D | D | S |
| 4 | S | S | U |
| 5 | U | U | S |
| 6 | U | D | U |
| 7 | D | D | S |
| 8 | S | D | U |
| 9 | U | S | S |
| 10 | U | U | U |

**TABLE 3**

| TDD Slot Configuration pattern | Unit | 7DS2U | DDDSU | SU | DDSU |
|---|---|---|---|---|---|
| FR | | FR1 | FR1 | FR1 | FR2 |
| referenceSubcarrierSpacing | kHZ | 30 | 30 | 30 | 60 |
| dl-UL-TransmissionPeriodicity | ms | 5 | 2.5 | 1 | 1 |
| nrofDownlinkSlots | | 7 | 3 | 0 | 2 |
| nrofDownlinkSymbols | | 6 | 10 | | 11 |
| nrofUplinkSlot | | 2 | 1 | 1 | 1 |
| nrofUplinkSymbols | | 4 | 2 | 0 | 0 |

FIG. 6A depicts a flowchart of a first scenario for the analysis and adjustment of IAB radio communications, based on CSI. The scenario begins at operation 601, where CSI values are collected between an IAB-Donor-DU and an IAB-MT. Next at operation 602, IAB CSI (between the IAB-Donor-DU and the IAB-MT) is analyzed via an AI model. An evaluation is made at determination 603, of whether the CSI values exceed a threshold. (Alternatively, other comparisons and dynamic thresholds may be considered in determination 603, including whether certain compared values are at, above, or below a threshold). If the threshold is met or exceeded, then the IAB-Donor is adjusted at operation 604 to use an alternative radio frame UL and DL pattern.

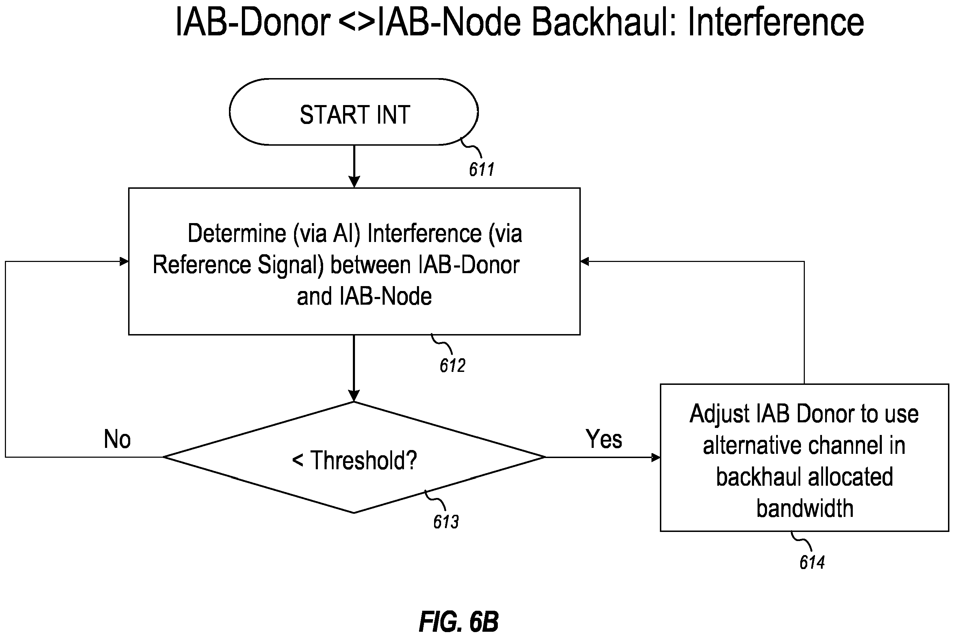

FIG. 6B depicts a flowchart of a second scenario for the analysis and adjustment of IAB radio communications, based on interference measurements. The scenario begins at operation 611, where reference signals or reference signal measurements are collected between an IAB-Donor-DU and an IAB-MT. Next at operation 612, IAB interference (between the IAB-Donor-DU and the IAB-MT, as determined from the reference signal or measurements) is analyzed via an AI model. An evaluation is made at determination 613, of whether the interference exceeds a threshold. (Alternatively, other comparisons and dynamic thresholds may be considered in determination 613, including whether certain compared values are at, above, or below a threshold). If the threshold is met or exceeded, then the IAB-Donor is adjusted at operation 614 to use an alternative channel in backhaul allocated bandwidth.

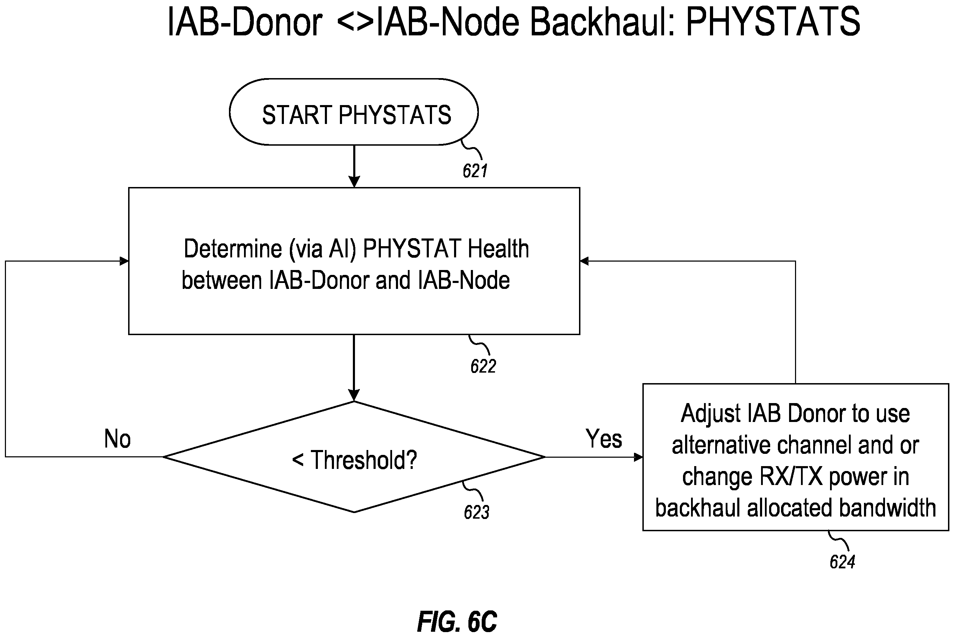

FIG. 6C depicts a flowchart of a third scenario for the analysis and adjustment of IAB radio communications, based on physical layer statistics (PHYSTATS). The scenario begins at operation 621, where the statistics or statistic measurements are collected between an IAB-Donor-DU and an IAB-MT. Next at operation 622, IAB health measurements (between the IAB-Donor-DU and the IAB-MT, as determined from the PHYSTATS) are analyzed via an AI model. An evaluation is made at determination 623, of whether the health measurements exceed a threshold. (Alternatively, other comparisons and dynamic thresholds may be considered in determination 623, including whether certain compared values are at, above, or below a threshold). If the threshold is met or exceeded, then the IAB-Donor is adjusted at operation 624 to use an alternative channel and/or change RX/TX power in the backhaul-allocated bandwidth.

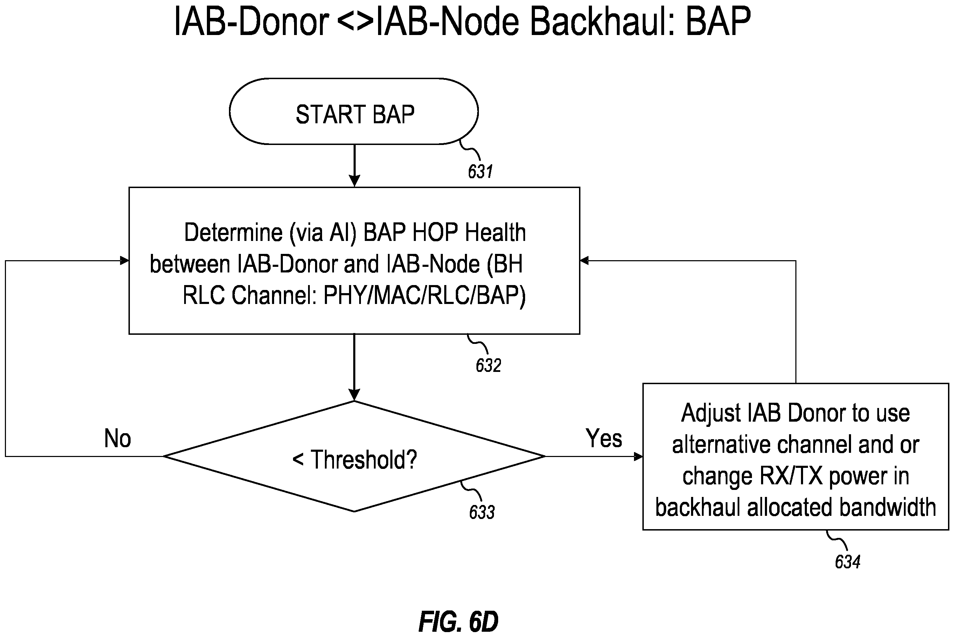

FIG. 6D depicts a flowchart of a fourth scenario for the analysis and adjustment of IAB radio communications, based on health of BAP communications. The scenario begins at operation 631, where BAP hop information collected between an IAB-Donor-DU and an IAB-MT. Next at operation 632, a BAP hop health measurement, e.g., between the IAB-Donor-DU and the IAB-MT, as determined from the backhaul RLC Channel (on one or more layers such as PHY/MAC/RLC/BAP) is analyzed via an AI model. An evaluation is made at determination 633, of whether the health value exceeds a threshold. (Alternatively, other comparisons and dynamic thresholds may be considered in determination 633, including whether certain compared values are at, above, or below a threshold). If the threshold is met or exceeded, then the IAB-Donor is adjusted at operation 634 to use an alternative channel and/or change RX/TX power in the backhaul-allocated bandwidth.

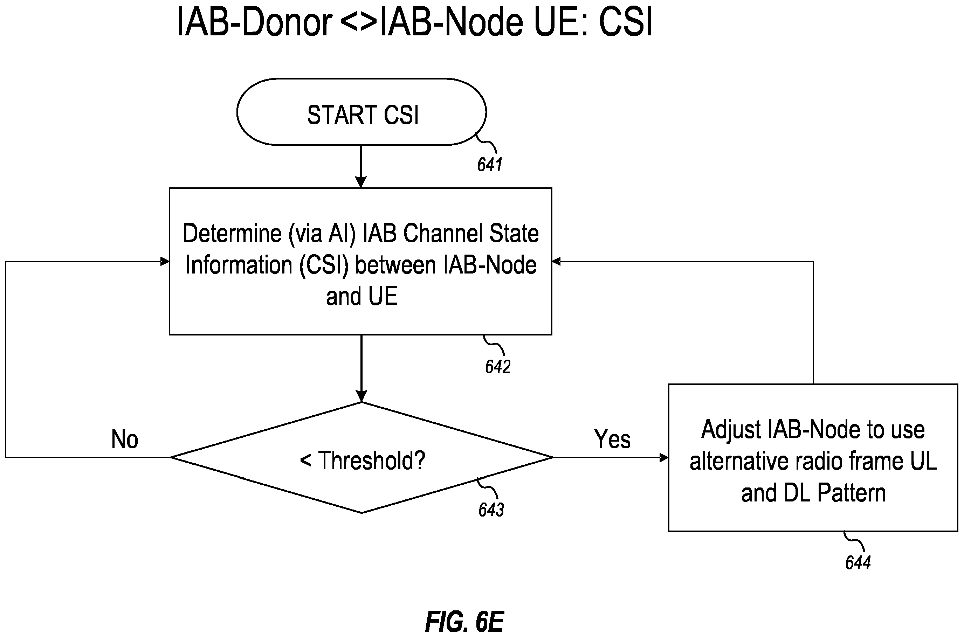

Other adjustments may be made on the basis of measurements of communications occurring between the IAB-Node DU and the UE. These are shown in FIGS. 6E to 6G.

FIG. 6E depicts a flowchart of a fifth scenario for the analysis and adjustment of IAB radio communications, based on CSI with a UE. The scenario begins at operation 641, where CSI values are collected between an IAB-Node-DU and a UE. Next at operation 642, IAB CSI (between the IAB-Node-DU and the UE) is analyzed via an AI model. An evaluation is made at determination 643, of whether the CSI exceeds a threshold. (Alternatively, other comparisons and dynamic thresholds may be considered in determination 643, including whether certain compared values are at, above, or below a threshold). If the threshold is met or exceeded, then the IAB Node is adjusted at operation 644 to use an alternative radio frame UL and DL pattern.

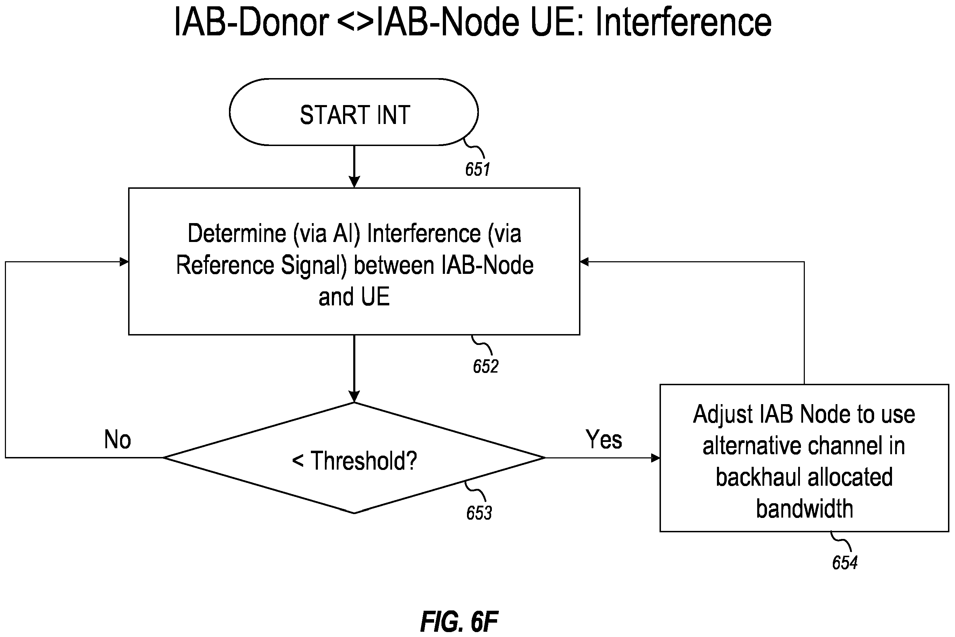

FIG. 6F depicts a flowchart of a sixth scenario for analysis and adjustment of IAB radio communications, based on interference measurements with a UE. The scenario begins at operation 651, where reference signals or reference signal measurements are collected between an IAB-Node-DU and a UE. Next at operation 652, IAB interference (between the IAB-Node-DU and the UE, as determined from the reference signal or measurements) is analyzed via an AI model. An evaluation is made at determination 653, of whether the interference exceeds a threshold. (Alternatively, other comparisons and dynamic thresholds may be considered in determination 653, including whether certain compared values are at, above, or below a threshold). If the threshold is met or exceeded, then the IAB Node is adjusted at operation 654 to use an alternative channel in backhaul allocated bandwidth.

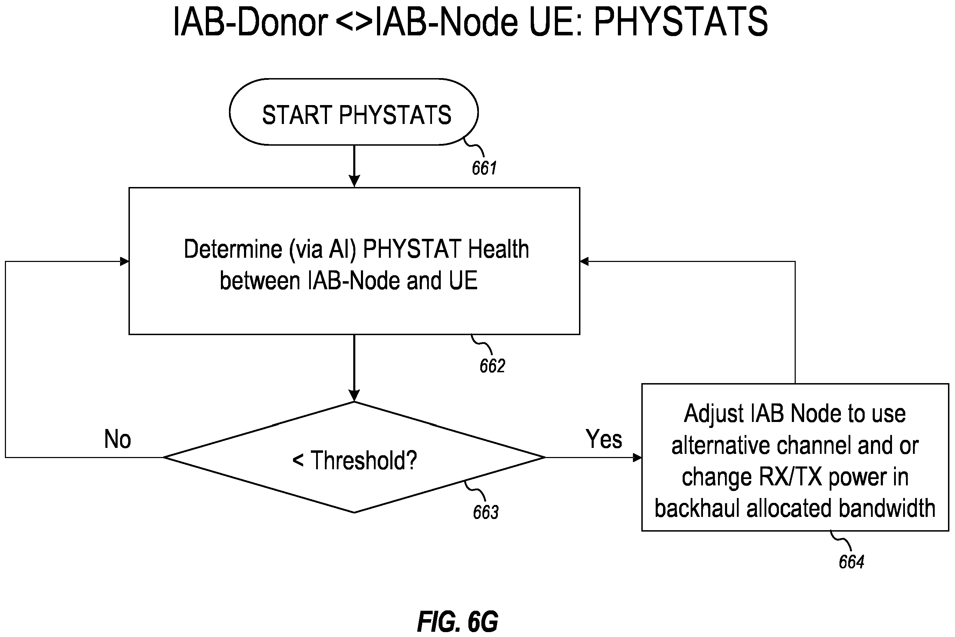

FIG. 6G depicts a flowchart of a seventh scenario for analysis and adjustment of IAB radio communications, based on physical layer statistics (PHYSTATS) with a UE. The scenario begins at operation 661, where the statistics or statistic measurements are collected between an IAB-Node DU and a UE. Next at operation 662, IAB health measurements (between the IAB-Donor-DU and the IAB-MT, as determined from the PHYSTATS) are analyzed via an AI model. An evaluation is made at determination 663, of whether the health measurements exceed a threshold. (Alternatively, other comparisons and dynamic thresholds may be considered in determination 663, including whether certain compared values are at, above, or below a threshold). If the threshold is met or exceeded, then the IAB Node is adjusted at operation 664 to use an alternative channel and/or change RX/TX power in the backhaul-allocated bandwidth.

### Self-Backhaul Configuration and Positioning

The following discusses approaches for dynamically determining and providing precise positioning of UEs using 5G mobile networking hardware, including in temporary-deployed network settings such as those used with ephemeral or mobile IAB nodes. These approaches may be used separately or in combination with the approaches for IAB optimization and adjustments discussed above.

One approach for positioning includes using separate TDD Patterns between a Donor and Node and between a Node and UE, monitoring these patterns for congestion that exceeds predetermined limits, and self-adjusting these communications where applicable. The initial patterns are compared to real-time traffic, such as UL SRS Traffic for those Devices that have been identified for location tracking at the Node. For instance, an UL-heavy pattern may be used at the Node to perform hyper-localization/positioning of UEs connected to the Node.

Another approach includes the use of a measurement engine (ME) to calculate time of arrival values (TOAs) for location engine (LE) localization results, consumable on the Node.

These localization functions may be fully implemented at a self-backhauling vRAN (e.g., IAB Node), enabling positioning of a UE to be entirely determined by a local node (e.g., without use of the backhaul nodes or the core network). These localization functions may be further coordinated with a positioning reference unit (PRU) (for calibration of location functions and signaling) and fingerprint reference unit (FRU) (for ensuring integrity of a network configuration) as options at the vRAN node, to provide a comprehensive self-correcting capability.

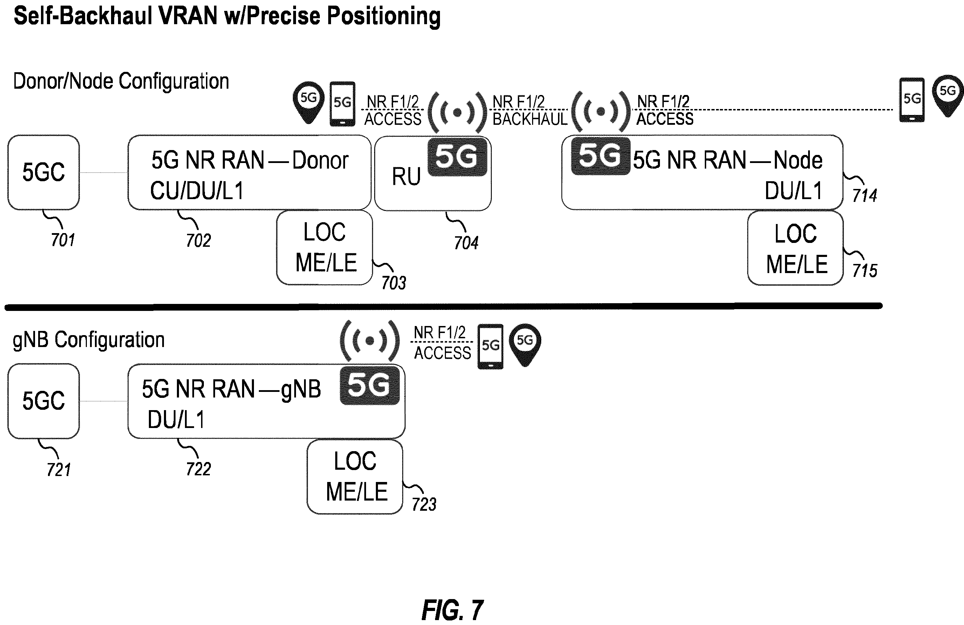

FIG. 7 depicts a donor/node configuration and a gNB configuration for UE positioning. In the donor/node configuration (e.g., in an IAB donor/node setting), a 5GC 701 provides core services to a 5GNR RAN at a Donor 702 (e.g., a CU/DU/L1 unit). This Donor 702 operates a Donor RU 704 and a location service 703 (referred to as a Donor measurement engine / location engine, ME/LE). The Donor RU 704 provides network backhaul to a Node 714 (e.g., a DU/L1 unit) and the Node 714 operates a location service 715 (referred to as a Node measurement engine / location engine, ME/LE).

In the gNB configuration, the 5GC 721 provides core services to a 5G NR RAN at a gNB 722 (e.g., a DU/L1 unit). The gNB 722 operates a location service 723 (referred to as a gNB measurement engine / location engine, ME/LE).

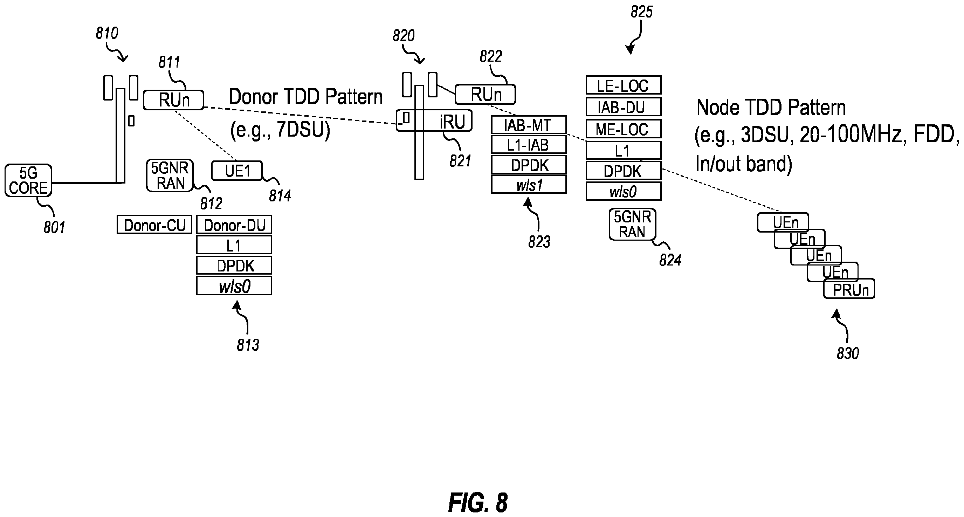

FIG. 8 depicts an architecture used for providing TDD patterns, including UE location functionality (LE-LOC and ME-LOC) operating on a respective node. This architecture first depicts how a 5GC 801 provides core services to a Donor 810, which operates a 5GNR RAN 812. The Donor 810 includes a RU 811 (labeled as "RUn") that provides connectivity to a UE1 814 and a connected Node 820. The 5GNR RAN 812 in this context operates as a Donor-DU, with services 813 including L1, packet processing (e.g., DPDK), and the like.

The architecture of FIG. 8 also depicts how the connected Node 820 is connected via its RU 821 (labeled as iRU), using a Donor TDD pattern (e.g., 7DSU). The connected Node 820 also includes a RU (labeled as "RUn" 822) which provides connectivity to UEs 830. This RUn 822 operates a 5GNR RAN 824 and hosts respective services 823, 825 including L1, packet processing, and the like, in addition to ME-location services (labeled as "ME-LOC").

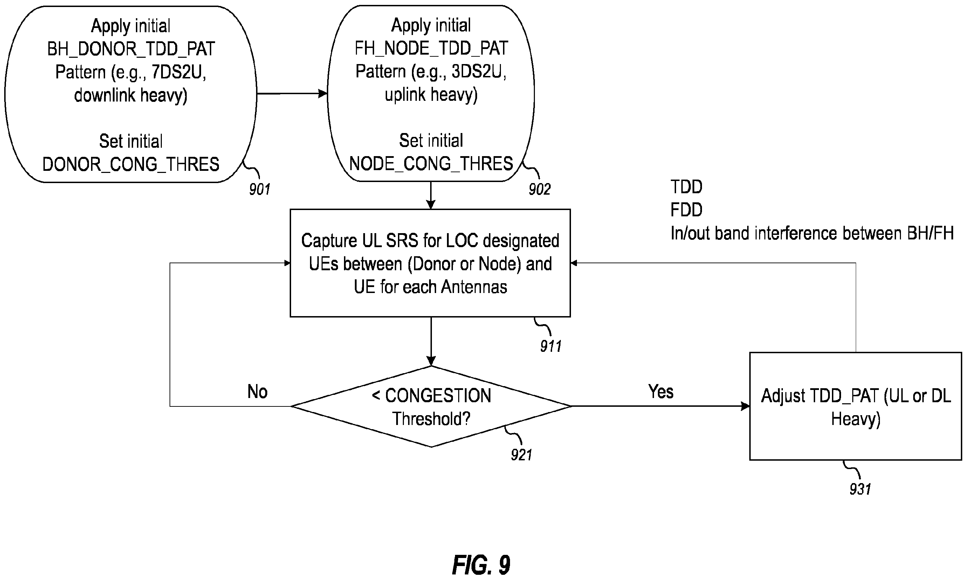

FIG. 9 depicts a flowchart of techniques for determining and adjusting TDD patterns, in connection with UE location functionality. This includes, at operation 901, the adjustment of backhaul connectivity. The adjustment of backhaul connectivity may include applying an initial pattern BH_DONOR_TDD_PAT (e.g., 7DS2U, downlink heavy) and setting an initial DONOR_CONG_THRES value that defines a donor congestion threshold. This also includes, at operation 902, the adjustment of fronthaul connectivity. The adjustment of fronthaul connectivity may include applying an initial pattern FH_NODE_TDD_PAT (e.g., 3DS2U, uplink heavy) and setting an initial NODE_CONG_THRES which defines a node congestion threshold.

Next, operation 911 depicts the capture of an uplink sounding reference signal (UL SRS) for location-designated UEs between a Donor/Node and a UE, for a respective antenna. This produces congestion information. This congestion information is compared at determination 921 to a threshold. If the information is less than a congestion threshold, then operation 931 is performed to adjust the TDD_PAT pattern (e.g., to adjust the amount of uplink or downlink used). Alternatively, other comparisons and dynamic thresholds may be considered in determination 921, including whether certain compared values are at, above, or below a threshold.

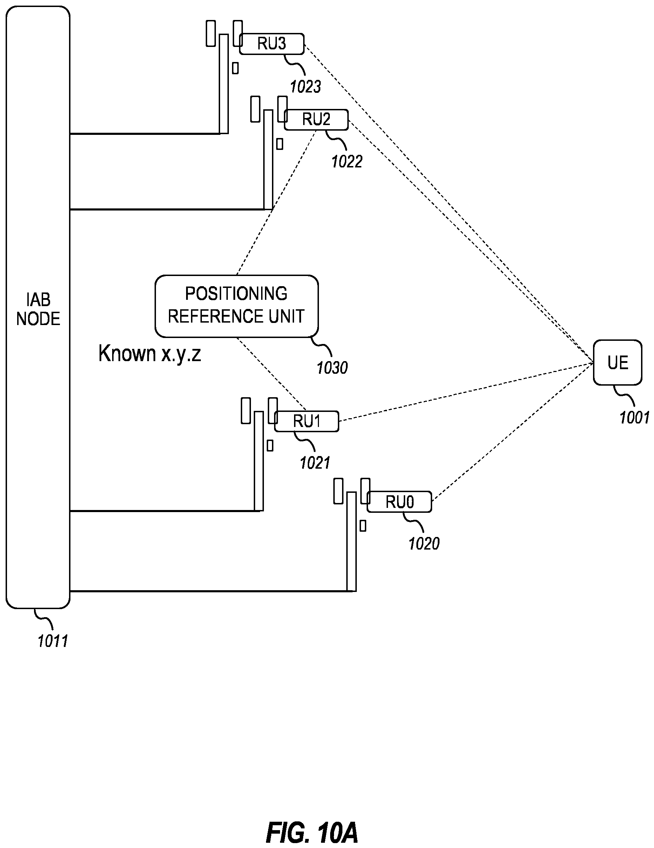

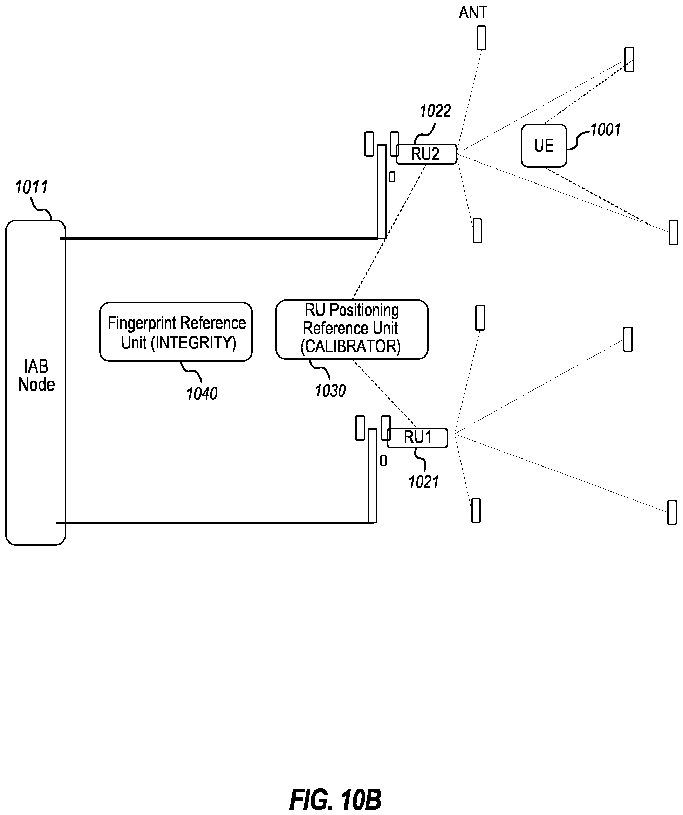

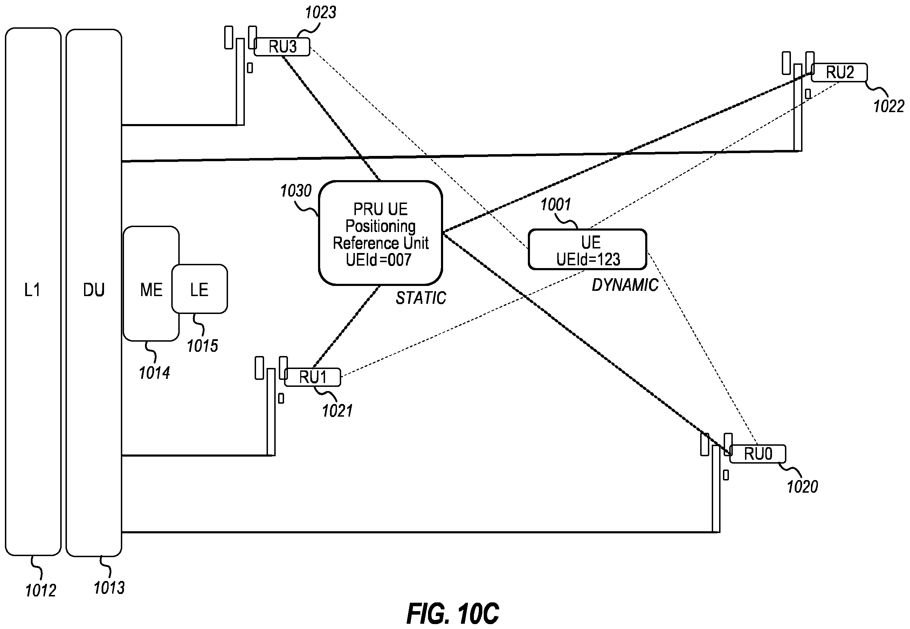

FIGS. 10A, 10B, and 10C depict respective arrangements of 5G networks, including the use of a RU positioning reference unit (calibrator) to assist with UE location functionality. In the respective arrangements, an assumption is made that a clock leader (e.g., grandmaster) distributes synchronized time to all RUs, so all RU jitter is the same. If the relative timesync between all RUs is less than 1 nanosecond (ns), then all RUs experience the same time drift.

FIG. 10A depicts a scenario where an IAB node 1011 provides connectivity to a UE 1001 via multiple radio units RU0 1020, RU1 1021, RU2 1022, RU3 1023. Here, a positioning reference unit PRU 1030 is located at a known x.y.z position. Thus, information about various UEs including time of arrival (TOA) can be compared to the known x.y.z position of the PRU 1030.

FIG. 10B depicts a variation of this scenario, where the PRU 1030 is located relative to the RU1 1021 and the RU2 1022, but the UE 1001 receives connectivity from multiple antennas of the RU2 1022. Additionally, an FRU 1040 is operated in the network to validate integrity of network connectivity conditions.

FIG. 10C depicts another variation of this scenario, where the PRU 1030 is operated as a UE at a static location, and is positioned relative to RU0 1020, RU1 1021, RU2 1022, RU3 1023. Here, the UE 1001 is operated at a dynamic (changing) location, while receiving connectivity from RUs RU0 1020, RU1 1021, RU2 1022, RU3 1023. In FIG. 10C, the specific functions of the Node including a L1 1012, DU 1013, measurement engine (ME) 1014, and location engine (LE) 1015 are depicted.

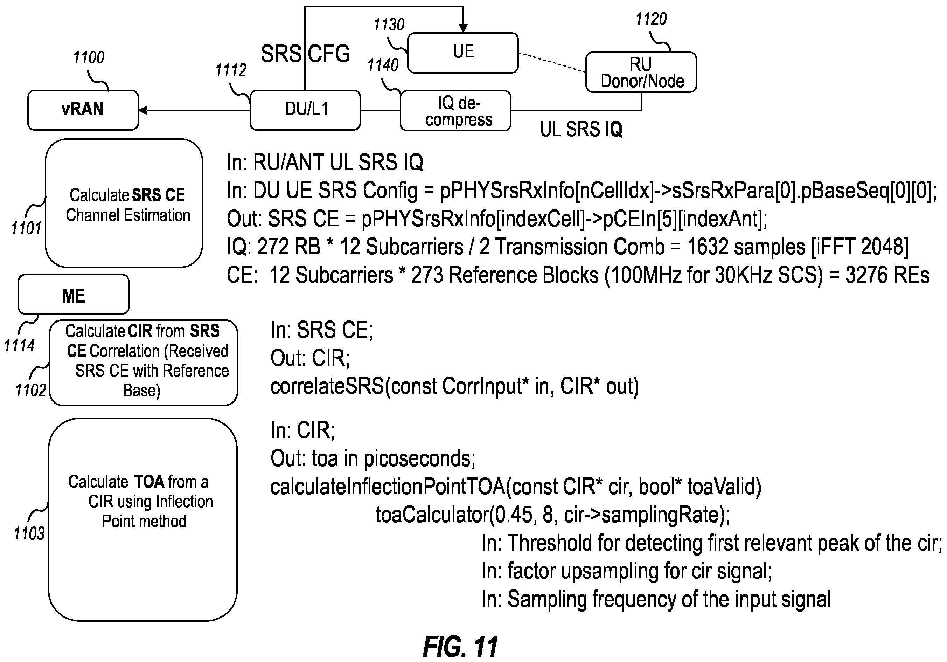

FIG. 11 depicts a configuration of a vRAN node 1100 to perform operations for UE location functionality, based on sounding reference signal (SRS) information and a time of arrival (TOA) calculation. This SRS information is obtained as the vRAN node 1100 receives information from a DU/L1 1112, which provides an SRS to a UE 1130 connected to a RU donor/node 1120. The RU donor/node 1120 reports its uplink SRS IQ information (including decompressed IQ data) to the DU/L1 1112.

The vRAN node 1100 operates a calculation function 1101 to determine the SRS CE (Sounding Reference Signal Channel Estimation) based on the RU/ANT UL SRS IQ, and based on the DU UE SRS Configuration information.

The ME 1114 operates a calculation function 1102 to determine the CIR from the SRS CE correlation. As an example, this calculation function 1102 receives an SRS channel estimation value and outputs a channel impulse response CIR value.

The ME 1114 also operates a calculation function 1103 to determine the time of arrival from the CIR value using an inflection point method. As an example, this calculation function 1103 receives a CIR value and outputs a time of arrival value in picoseconds. Multiple time of arrival values from known RAN equipment locations then can be used to determine a location of a particular UE, as part of a positioning system or positioning algorithm.

The ME 1114 can be located on an IAB Node or IAB Donor. The ME 1114 consumes the UL SRS IQ (in-phase quadrature) and creates a TOA (time of arrival) relative to a known ground truth. The ME 1114 creates the TOA for the PRU and compares the result with the previously (e.g., manually entered) actual result, and produces a delta to be applied and/or calibrated at a LE (e.g., LE 1015). In an example, the ME 1114 creates the delta between the day-0 fingerprint IQ resources from each antenna and compares against pre-set guardrails for integrity checking.

FIG. 11 thus demonstrates the calculations that happen in real time using first-in-time-measurements from the vRAN L1, SRS response, channel estimation, SRS correlation (comparing the original with the response), then inflection point to find the actual peak for TOA calculation while ignoring the multipass noise. An LE (location engine) can use a variety of algorithms to produce an X.Y.Z relative to known ground truth manually entered. The PRU ME TOA results together with the UE TOA results are combined to calibrate out cable and other OTA latency blockers. Like the ME, the LE can also reside on the IAB Node or IAB Donor (or even in the Cloud). The closer the ME/LE is to the actual UEs the better for latency sensitive applications. Thus, an enhanced method for several location calculations per second is to locate the LE/ME close to, or at, the IAB Node.

### Implementation Methods and Configurations

IQ responses for a IAB Node FRU and PRU scenario can also be processed on an IAB Donor (e.g., for a private network) that are scheduled via the IAB. Thus, both positioning (PRU) and fingerprint (FRU) measurements can be based off the same IQ responses from an IAB Node.

Accordingly, relevant configurations of the PRU and FRU may include: a Node PRU only, a Node FRU only, or a combination of a PRU and FRU located at a node; a Donor PRU only, a Donor FRU only, or a combination of a PRU and FRU located at a Donor; or a configuration without FRUs or PRUs. The scenario of no Node FRUs or PRUs may be provided in private 5G networks where IQ response processing is done at the Donor for security.

In some examples, the IQ responses are scheduled as UL SRS to the IAB-Donor just as is the case for IAB UL Traffic via scheduling requests. Then, the ME calculates the TOA for the PRU baseline and all subsequent IAB-NODE UE positioning TOAs are compared against that PRU baseline for calibration. The same process can be used for the FRU except instead of a ME calculating TOAs, a fingerprint engine sets the baseline for the fingerprint signatures, and all subsequent fingerprint SRS UL FRU traffic is compared against the baseline. In still further examples, the FRU and the PRU use the same UL SRS from the NODE via the IAB scheduling for the NODE UE-and separate IQ responses are not provided.

Also in further examples, the AI engine (e.g., an AI LLM) can be built and operated using the RAN STATS on the Node, transferred to the Donor, or transferred to an upstream cloud, for AI processing. The AI-enablement may construct its model (e.g., an LLM) based on health (e.g., packet congestion) of the network, and then adjust network operations (e.g., TDD patterns, etc.) as noted above according to the procedures of FIGS. 6A to 6G and FIG. 7. The specific method for model construction and operation may depend on processing power availability and key performance indicator (KPI) values, such as packet dropping thresholds, collisions, etc.

5G location determination does not need to occur at the expense of communications, so guardrails may be established to enable the AI model to generatively learn then adjust settings. (For instance, some security-sensitive private 5G instances may cause immediate shutdown of the entire location detection feature if communications suffer or the FRU detects a threat). Thus, as will be understood, the AI-enabled improvements and network modifications may be used independently from the 5G location/positioning capabilities discussed herein.

In other words, the AI-enabled improvements and network modifications can operate on the backchannel(s) (F 1-U) among IAB Donor and Node(s), and the result of the AI-enabled decisions can be effectuated on the F 1-U backchannel(s). For example if there is congestion on the backchannel, an example modification may include a switch to a different TDD pattern (or other methods discussed herein) that are applied to the specific donor-node BAP-routed backchannel(s). In some examples, the 5G location/positioning capabilities may also be effectuated on the BAP F 1-U backchannel(s). The 5G location/positioning could potentially oversubscribe the communications channel-so in an extreme case the 5G location/positioning capabilities would be shut down (so that the associated backchannel is paused and or deleted entirely).

Accordingly, a variety of AI deployment combinations and action triggers may be provided with the present techniques based on combinations of IAB donor/node communication, 5G location/positioning, fingerprint reference unit (FRU), positioning reference unit (PRU), and backchannel (F 1-U) applications.

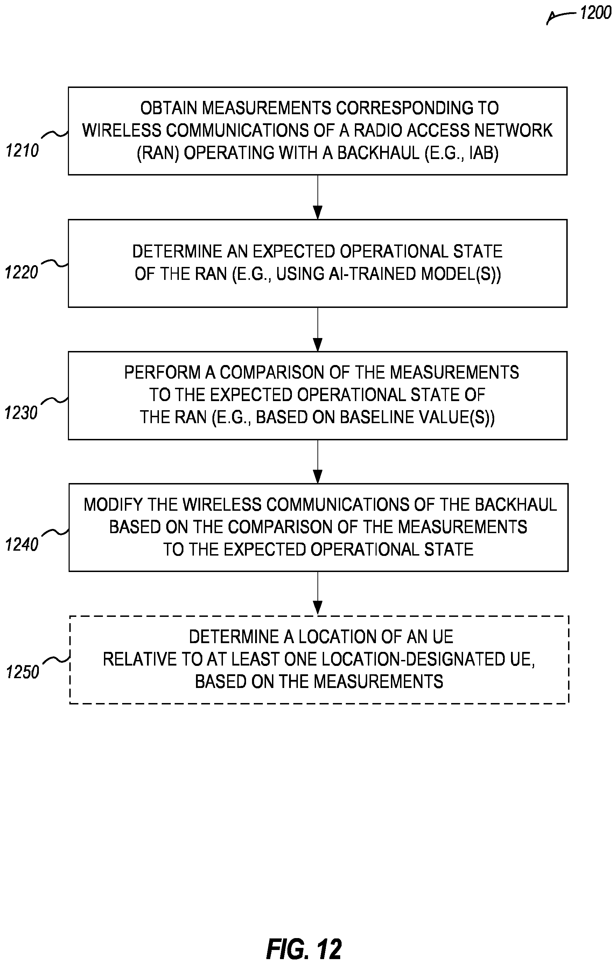

FIG. 12 depicts a flowchart of an example method for operation of backhaul communications used with a radio access network (RAN).

Operation 1210 includes obtaining measurements corresponding to wireless communications of a backhaul for a radio access network (RAN). In an example, these measurements are based on in-phase and quadrature (IQ) data of the wireless communications. The wireless communications of the backhaul may correspond to communications between an Integrated Access Backhaul (IAB) Donor (IAB-Donor) and an IAB Node (IAB-Node).

Operation 1220 includes determining an expected operational state of the backhaul or the RAN (such as via use of one or more AI-trained models). For instance, the expected operational state may relate to: channel state information (CSI), interference, physical layer statistics, or backhaul access protocol (BAP) health (e.g., for a mobile termination (MT) of the IAB-Node, or for a user equipment (UE) connected to the IAB-Node). In another example, the expected operational state may relate to: congestion determined from an uplink sounding reference signal (UL SRS) for at least one location-designated user equipment (UE) located between the IAB-Donor and the IAB-Node for respective antennas.

Operation 1230 includes performing a comparison of the measurements to an expected operational state of the backhaul or the RAN. The expected operational state may be established from a baseline of the IQ data in the RAN, as discussed above. The comparison of the measurements or the expected operational state may be based on results inferred, classified, or predicted from a trained model.

Operation 1240 includes modifying the wireless communications of the backhaul based on the comparison of the measurements to the expected operational state. As an example, modifying may include changing bandwidth allocated to the backhaul (e.g., to the IAB-Donor, or to the IAB-Node) with at least one of: use of an alternative channel, use of an alternative radio frame uplink and downlink pattern, or a change in receive/transmit power. As another example, modifying may include adjusting a time division duplex (TDD) or frequency division duplex (FDD) pattern used in an uplink, a downlink, or both.

Operation 1250 includes optionally, determining a location of a UE, relative to at least one location-designated UE (such as via a PRU), based on the measurements. This may include determining a location of another UE, based on measurements relative to the at least one location-designated UE. For instance, operations to determine the location of the another UE may be are implemented in a location service located at a IAB-Donor or at a IAB-Node. In still further examples, to determine the location of the another UE is based on operations that: determine a sounding reference signal (SRS) channel estimation; calculate a channel impulse response based on the SRS channel estimation; and calculate a time of arrival to the another UE using an inflection point method.

Additional examples of the presently described embodiments include the following, non-limiting implementations. Each of the following non-limiting examples may stand on its own or may be combined in any permutation or combination with any one or more of the other examples provided below or throughout the present disclosure.

Example 1 is a computing system, comprising: processing circuitry; and a memory device including instructions embodied thereon, wherein the instructions, which when executed by the processing circuitry, configure the processing circuitry to perform operations that: obtain measurements corresponding to wireless communications of a radio access network (RAN) operating with a backhaul, the measurements based on in-phase and quadrature (IQ) data of the wireless communications; perform a comparison of the measurements to an expected operational state of the RAN, wherein the expected operational state is established from a baseline of the IQ data in the RAN; and modify the wireless communications of the backhaul based on the comparison of the measurements to the expected operational state.

In Example 2, the subject matter of Example 1 optionally includes subject matter where the wireless communications of the backhaul correspond to communications between an Integrated Access Backhaul (IAB) Donor (IAB-Donor) and an IAB Node (IAB-Node), and wherein the expected operational state relates to: channel state information (CSI), interference, physical layer statistics, or backhaul access protocol (BAP) health, for a mobile termination (MT) of the IAB-Node.

In Example 3, the subject matter of Example 2 optionally includes subject matter where to modify the wireless communications of the backhaul includes to change bandwidth allocated to the backhaul to the IAB-Donor with at least one of: use of an alternative channel, use of an alternative radio frame uplink and downlink pattern, or a change in receive/transmit power.

In Example 4, the subject matter of any one or more of Examples 1-3 optionally include subject matter where the wireless communications of the backhaul correspond to communications between an Integrated Access Backhaul (IAB) Donor (IAB-Donor) and an IAB Node (IAB-Node), and wherein the expected operational state relates to: channel state information (CSI), interference, or physical layer statistics, for a user equipment (UE) connected to the IAB-Node.

In Example 5, the subject matter of Example 4 optionally includes subject matter where to modify the wireless communications of the backhaul includes to change bandwidth allocated to the backhaul to the IAB-Node with at least one of: use of an alternative channel, use of an alternative radio frame uplink and downlink pattern, or a change in receive/transmit power.

In Example 6, the subject matter of any one or more of Examples 1-5 optionally include subject matter where the wireless communications of the backhaul correspond to communications between an Integrated Access Backhaul (IAB) Donor (IAB-Donor) and an IAB Node (IAB-Node), and wherein the expected operational state relates to: congestion determined from an uplink sounding reference signal (UL SRS) for at least one location-designated user equipment (UE) located between the IAB-Donor and the IAB-Node for respective antennas.

In Example 7, the subject matter of Example 6 optionally includes subject matter where to modify the wireless communications of the backhaul includes to adjust a time division duplex (TDD) or frequency division duplex (FDD) pattern used in an uplink, a downlink, or both.

In Example 8, the subject matter of any one or more of Examples 6-7 optionally include subject matter where the instructions further configure the processing circuitry to perform operations that: determine a location of another UE, based on measurements relative to the at least one location-designated UE; wherein operations to determine the location of the another UE are implemented in a location service located at the IAB-Donor or the IAB-Node.

In Example 9, the subject matter of Example 8 optionally includes subject matter where to determine the location of the another UE is based on operations that: determine a sounding reference signal (SRS) channel estimation; calculate a channel impulse response based on the SRS channel estimation; and calculate a time of arrival to the another UE using an inflection point method.

In Example 10, the subject matter of any one or more of Examples 1-9 optionally include subject matter where the comparison of the measurements or the expected operational state is based on results inferred from a trained model.

Example 11 is a method for operation of backhaul communications used with a radio access network (RAN), performed by processing circuitry of a computing system, the method comprising: obtaining measurements corresponding to wireless communications of a radio access network (RAN) operating with a backhaul, the measurements based on in-phase and quadrature (IQ) data of the wireless communications; performing a comparison of the measurements to an expected operational state of the RAN, wherein the expected operational state is established from a baseline of the IQ data in the RAN; and modifying the wireless communications of the backhaul based on the comparison of the measurements to the expected operational state.

In Example 12, the subject matter of Example 11 optionally includes subject matter where the wireless communications of the backhaul correspond to communications between an Integrated Access Backhaul (IAB) Donor (IAB-Donor) and an IAB Node (IAB-Node), and wherein the expected operational state relates to: channel state information (CSI), interference, physical layer statistics, or backhaul access protocol (BAP) health, for a mobile termination (MT) of the IAB-Node.

In Example 13, the subject matter of Example 12 optionally includes subject matter where modifying the wireless communications of the backhaul includes changing bandwidth allocated to the backhaul to the IAB-Donor with at least one of: use of an alternative channel, use of an alternative radio frame uplink and downlink pattern, or a change in receive/transmit power.

In Example 14, the subject matter of any one or more of Examples 11-13 optionally include subject matter where the wireless communications of the backhaul correspond to communications between an Integrated Access Backhaul (IAB) Donor (IAB-Donor) and an IAB Node (IAB-Node), and wherein the expected operational state relates to: channel state information (CSI), interference, or physical layer statistics, for a user equipment (UE) connected to the IAB-Node.

In Example 15, the subject matter of Example 14 optionally includes subject matter where modifying the wireless communications of the backhaul includes changing bandwidth allocated to the backhaul to the IAB-Node with at least one of: use of an alternative channel, use of an alternative radio frame uplink and downlink pattern, or a change in receive/transmit power.

In Example 16, the subject matter of any one or more of Examples 11-15 optionally include subject matter where the wireless communications of the backhaul correspond to communications between an Integrated Access Backhaul (IAB) Donor (IAB-Donor) and an IAB Node (IAB-Node), and wherein the expected operational state relates to: congestion determined from an uplink sounding reference signal (UL SRS) for at least one location-designated user equipment (UE) located between the IAB-Donor and the IAB-Node for respective antennas.

In Example 17, the subject matter of Example 16 optionally includes subject matter where modifying the wireless communications of the backhaul includes adjusting a time division duplex (TDD) or frequency division duplex (FDD) pattern used in an uplink, a downlink, or both.

In Example 18, the subject matter of any one or more of Examples 16-17 optionally include determining a location of another UE, based on measurements relative to the at least one location-designated UE; wherein determining the location of the another UE is performed by a location service located at the IAB-Donor or the IAB-Node.

In Example 19, the subject matter of Example 18 optionally includes subject matter where determining the location of the another UE is based on: determining a sounding reference signal (SRS) channel estimation; calculating a channel impulse response based on the SRS channel estimation; and calculating a time of arrival to the another UE using an inflection point method.

In Example 20, the subject matter of any one or more of Examples 11-19 optionally include subject matter where the comparison of the measurements or the expected operational state is based on results inferred from a trained model.

Example 21 is at least one non-transitory machine-readable medium capable of storing instructions, wherein the instructions when executed by at least one processor of a computing device, cause the at least one processor to: obtain measurements corresponding to wireless communications of a radio access network (RAN) operating with a backhaul, the measurements based on in-phase and quadrature (IQ) data of the wireless communications; perform a comparison of the measurements to an expected operational state of the RAN, wherein the expected operational state is established from a baseline of the IQ data in the RAN; and modify the wireless communications of the backhaul based on the comparison of the measurements to the expected operational state.

In Example 22, the subject matter of Example 21 optionally includes subject matter where the wireless communications of the backhaul correspond to communications between an Integrated Access Backhaul (IAB) Donor (IAB-Donor) and an IAB Node (IAB-Node), and wherein the expected operational state relates to: channel state information (CSI), interference, physical layer statistics, or backhaul access protocol (BAP) health, for a mobile termination (MT) of the IAB-Node.

In Example 23, the subject matter of Example 22 optionally includes subject matter where to modify the wireless communications of the backhaul includes to change bandwidth allocated to the backhaul to the IAB-Donor with at least one of: use of an alternative channel, use of an alternative radio frame uplink and downlink pattern, or a change in receive/transmit power.

In Example 24, the subject matter of any one or more of Examples 21-23 optionally include subject matter where the wireless communications of the backhaul correspond to communications between an Integrated Access Backhaul (IAB) Donor (IAB-Donor) and an IAB Node (IAB-Node), and wherein the expected operational state relates to: channel state information (CSI), interference, or physical layer statistics, for a user equipment (UE) connected to the IAB-Node.

In Example 25, the subject matter of Example 24 optionally includes subject matter where to modify the wireless communications of the backhaul includes to change bandwidth allocated to the backhaul to the IAB-Node with at least one of: use of an alternative channel, use of an alternative radio frame uplink and downlink pattern, or a change in receive/transmit power.

In Example 26, the subject matter of any one or more of Examples 21-25 optionally include subject matter where the wireless communications of the backhaul correspond to communications between an Integrated Access Backhaul (IAB) Donor (IAB-Donor) and an IAB Node (IAB-Node), and wherein the expected operational state relates to: congestion determined from an uplink sounding reference signal (UL SRS) for at least one location-designated user equipment (UE) located between the IAB-Donor and the IAB-Node for respective antennas.

In Example 27, the subject matter of Example 26 optionally includes subject matter where to modify the wireless communications of the backhaul includes to adjust a time division duplex (TDD) or frequency division duplex (FDD) pattern used in an uplink, a downlink, or both.

In Example 28, the subject matter of any one or more of Examples 26-27 optionally include subject matter where the instructions further configure the at least one processor to perform operations that: determine a location of another UE, based on measurements relative to the at least one location-designated UE; wherein operations to determine the location of the another UE are implemented in a location service located at the IAB-Donor or the IAB-Node.

In Example 29, the subject matter of Example 28 optionally includes subject matter where to determine the location of the another UE is based on operations that: determine a sounding reference signal (SRS) channel estimation; calculate a channel impulse response based on the SRS channel estimation; and calculate a time of arrival to the another UE using an inflection point method.

In Example 30, the subject matter of any one or more of Examples 21-29 optionally include subject matter where the comparison of the measurements or the expected operational state is based on results inferred from a trained model.

### IAB Architecture Examples

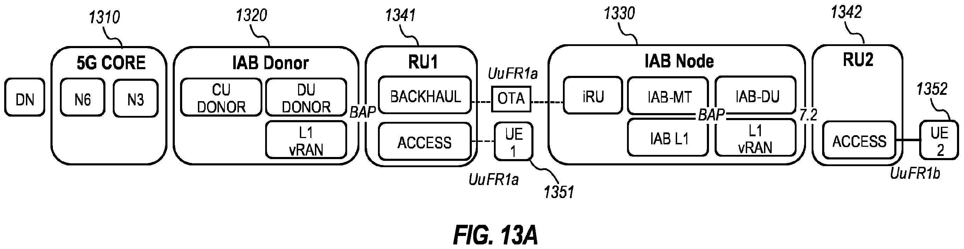

FIG. 13A, FIG. 13B, and FIG. 13C depict additional architecture details of IAB configurations. As per 3GPP TS 123 501, Integrated access and backhaul (IAB) enables wireless in-band and out-of-band relaying of NR Uu access traffic via NR Uu backhaul links. The Uu backhaul links can exist between the IAB-node and a gNB, referred to as IAB-donor, and another IAB-node. The IAB node that supports the Uu interface toward the IAB-donor or another parent IAB-node is referred to as an IAB-UE. In an example, the IAB reuses the CU/DU architecture (defined in TS 38.401), and the IAB operations via F1 (between IAB-donor and IAB-node) are invisible to the 5GC. IAB performs relaying at layer-2, and therefore does not require a local UPF, and as discussed above IAB supports multi-hop backhauling.

As shown in FIG. 13A, an IAB architecture for 5G systems includes an gNB-DU in the IAB-node (IAB Node 1340) that is responsible for providing NR Uu access to UEs (e.g., UE 1352) and child IAB-nodes (e.g., via RU2 1342). The corresponding gNB-CU function resides on the IAB-Donor gNB 1320, which controls the IAB Node 1330 gNB-DU via the F1 interface (e.g., provided by RU1 1341, which also provides NR Uu access to UEs such as UE 1351). An IAB-Node appears as a normal gNB to UEs and other IAB-nodes and allows them to connect to the 5G Core 1310. Thus, the IAB-UE function behaves as a UE, and reuses UE procedures to connect to the gNB-DU on a parent IAB-node or IAB-donor for access and backhauling; and to connect the gNB-CU on the IAB-donor via RRC for control of the access and backhaul link.

FIG. 13B depicts a simple donor-node network arrangement, where the IAB Donor 1320 operates a RU 1341 to provide service to an UE1 1351, and as the IAB Donor 1320 provides over-the-air wireless backhaul to the IAB Node 1330. The IAB Node operates the iRU 1335 (for IAB connectivity) and a RU 1342, and this RU 1342 in turn provides service to a UE2 1352.

FIG. 13C depicts an additional donor-node network arrangement, including the use of multiple FRUs. Here, a 5GNR Donor RAN 1321 uses an O-RU 1343 to provide access to a UE1 1351, PRU 1361, and FRU 1362, and a 5GNR Node RAN uses an O-RU 1344 to provide access to a UE2 1352, PRU 1363, and FRU 1364. The 5GNR Node RAN 1331 connects to the 5GNR Donor RAN 1321 via a backhaul (e.g., IAB), and the 5GNR Donor RAN 1321 connects to the 5G Core 1310 via a wired/fiber connection.

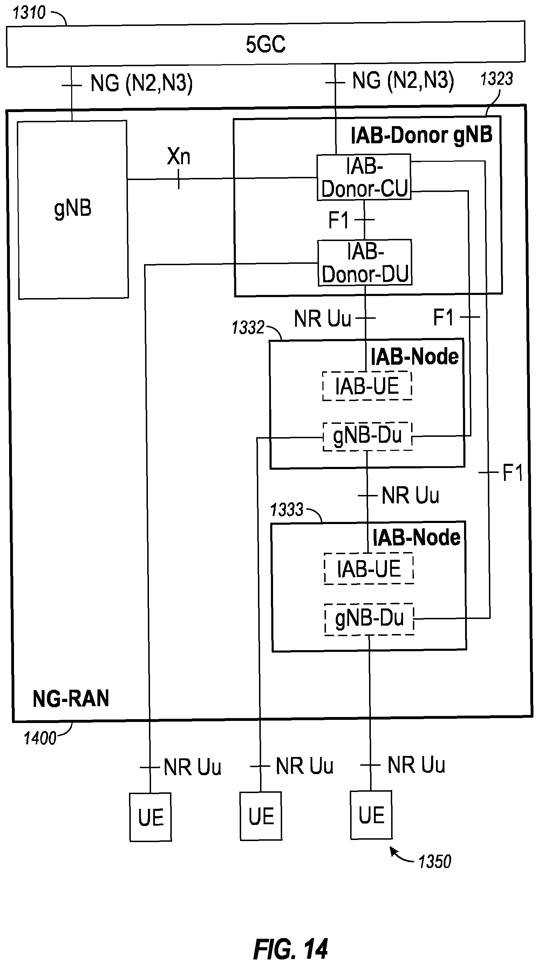

FIG. 14 depicts an 3GPP IAB reference architecture of a NG-RAN 1400 with two backhaul hops, when connected to a 5G Core 1310. Here, this IAB architecture for 5GS provides a gNB-DU in the IAB-node (IAB Nodes 1332, 1333) that is responsible for providing NR Uu access to UEs (e.g., UEs 1350) and child IAB-nodes. The corresponding gNB-CU function resides on the IAB-donor gNB (e.g., IAB Donor gNB 1323), which controls IAB-node gNB-DU via the F1 interface. The IAB-node appears as a normal gNB to UEs and other IAB-nodes and allows them to connect to the 5G Core 1310. The IAB-UE function behaves as a UE, and reuses UE procedures to connect to the gNB-DU on a parent IAB-node or IAB-donor for access and backhauling; and to connect to the gNB-CU on the IAB-donor via RRC for control of the access and backhaul link.

As discussed in 3GPP TS 123 501, IAB approaches enable wireless in-band and out-of-band relaying of NR Uu access traffic via NR Uu backhaul links. The Uu backhaul links can exist between an IAB-Node (e.g., shown as IAB Nodes 1332, 1333) and a gNB in an IAB-Donor (shown as IAB Donor 1323), which itself may be another IAB-Node. The IAB node that supports the Uu interface toward the IAB-Donor or another parent IAB-Node is referred to in the 3GPP TS as an IAB-UE. In some examples, the IAB may reuse the CU/DU architecture defined in TS 38.401. The IAB operations via F1 (e.g., between IAB Donor 1323 and IAB Nodes 1332, 1333) may not be visible to the 5G Core 1310. IAB performs relaying at layer 2, and therefore might not need a local UPF. IAB also supports multi-hop backhauling. Other 3GPP IAB reference architectures (not shown) may include multiple (e.g., two) backhaul hops when connected to a 5G Core 1310. Other variations may also be provided based on the architectures outlined in FIGS. 13A, 13B, and 13C.

### Integration with AI Framework and Fingerprint Reference Unit (FRU)

Further approaches of the self-backhaul vRAN and positioning techniques may be adapted based on the unique fingerprinting of IQ data, and the comparison and evaluation of IQ data to determine whether network conditions have degraded as a result of interference, device malfunction or misconfiguration, or other unexpected service disruptions. For instance, FRUs can be placed according to geographical distance, to monitor communications among different antennas of a single donor or node, or to monitor multiple antennas of a Donor or Nodes that have multiple cells. An IAB Donor or an IAB Node can have multiple radios (e.g., each with multiple antennas), and FRU(s) can be placed (or scattered) based on the radios and antennas to monitor different aspects of the network. In an example, the comparison and evaluation of IQ data may include the use of an algorithm or process to create, train, and operate an AI learning model to identify service disruption events. This AI learning model and related analysis can be used to identify and mitigate service disruption, whether caused by interference, channel and multi-pass interference, or scheduling constraints.

As will be understood, in the 5G communications setting, IQ reference data (also known as "I/Q data") generally refers to the components of an observed signal (the in-phase and quadrature phases of a sine wave), providing a representation of how a carrier is modulated in frequency, amplitude, and phase. In some of the following examples, the unique fingerprint of IQ reference data samples produced by the FRU(s) (referred to herein as iFRU responses) are baselined and then compared against live periodic real-time monitoring of path loss situations produced by the FRU(s) (referred to herein as pFRU responses). For instance, if a pFRU response (e.g., a value at time n) is greater than a baseline (e.g., an initial value at time 0) iFRU Response, then a network disruption scenario may be identified. The detection of the network disruption scenario may be used to trigger or control a remedial action, such as to adjust or decommission the ephemeral vRAN (e.g., to disconnect vRAN functions at an IAB node), or to modify operational components of the 5G network in an attempt to resolve the disruption (e.g., to provide some reconfiguration in an attempt to reduce interference). As noted, these scenarios may be further analyzed by AI inference or training models, and such AI inference or training models may be used to recommend or automatically implement network changes that reduce or resolve the disruption.

These data processing operations may be used in a variety of scenarios of a 5G vRAN to detect security breaches or compromised equipment, monitor for misconfiguration or mis-deployment of a network, or detect other improper or incorrect network configurations. Such scenarios may include disruption occurring in private 5G networks, macro 5G networks, and IAB networking scenarios. As a non-limiting example, a security breach or attempts by a man-in-the-middle attack to intercept cellphone data can be easily detected from abnormal FRU data measurements, as compared with earlier fingerprint measurements captured at the FRU(s). The adaptive nature of these techniques also enable minor remedial actions (e.g., reconfiguring one antenna, changing certain network settings, etc.) or major remedial actions (e.g., turning off one or more antennas, or shutting down the entire IAB node), or recommending and enacting remedial actions that are determined in real-time.

Various processing techniques with AI models and algorithms may be used on an FRU dataset, including processing to classify, sort through, process, and act on FRU response information. Such FRU response information that is relevant to the identification of a network disruption scenario may include but is not limited to measurements in one or more of: Block Error Rate, or BLER (Number of erroneous blocks / the Total number of blocks received); SNR (signal-to-interference/noise ratio), RSRP (Reference Signal Received Power); and RSRQ (Reference Signal Received Quality). Any of these measurements can be used to trigger live (e.g., real-time, or near real-time) adjustments to the Distributed Unit (DU) at a vRAN node. The network adjustments that may be performed include, but are not limited to, the use of one or more of: Modulation and Coding Scheme (MCS) level changes; periodicity of reference signal adjustments; radio unit (RU) compression rate changes; or other changes used to adjust the operation of the radio operations of the vRAN node and the overall 5G network.

Predetermined thresholds can be manually recorded and/or AI-directed based on FRU IQ signatures and recorded data values. The use of adaptive thresholds and AI analysis may be especially useful in temporary vRAN deployments where communication services may be essential, for example 5G applications that are temporarily placed in a particular area for critical communication services (e.g., government, entertainment, commercial use cases). With these critical communication services, initial antenna placement may be changed or disrupted at any time-up to and including the complete loss of an antenna. In this scenario, detection of the disruption at one antenna may allow decommission of the use of the antenna, and a determination that the remaining antennas are determined to be sufficient to continue network operations. However, in this scenario, if the remaining antennas are not sufficient to continue network operations, a complete decommissioning of the radio node (e.g., a self-backhauling IAB-Node) may occur followed by a new deployment of the node.

Similar scenarios that may experience network disruption include the use of nodes deployed for extra capacity, such as at stadium events or in response to natural disasters. In these scenarios, antenna placement may be static, but the path loss may vary based on vegetation, weather, human activity, unforeseen blockages, and/or other sources of interference. Respective detection scenarios may define thresholds that are more accommodating, or may define thresholds which trigger additional self-backhaul provisioning.

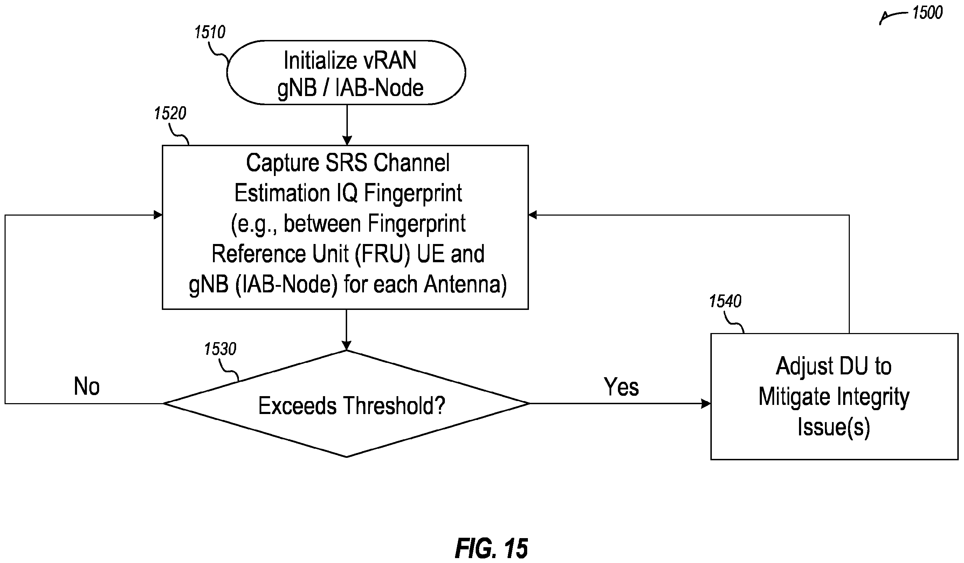

FIG. 15 depicts a flowchart 1500 of an approach for an analysis of IQ fingerprint data, according to an example. This approach is directed at the collection of network data and measurements that may be used in combination with an AI Training and Learning functional framework. Although this flowchart and refers to the use of AI data analysis and evaluation in an IAB node setting, it will be understood that similar approaches would apply to scenarios that do not involve AI data analysis or IAB connectivity.

As shown, at operation 1510, an initial action includes initializing the vRAN node (e.g., an gNB or IAB-Node) to provide connectivity (e.g., via IAB technologies). Next, at operation 1520, data is collected at regular intervals to evaluate for a potential network disruption. In an example, this data includes SRS Channel Estimation IQ data, which is used to produce an IQ Fingerprint. This SRS Channel Estimation IQ data may be collected based on SRS transmissions between the FRU(s) (e.g., operating as a UE) and a gNB (e.g., the IAB-Node) for multiple respective antennas.

At operation 1530, a determination is performed to compare the captured data to a fingerprint threshold and/or other metrics relevant to communication state of the network. In an example, channel characteristics of a periodic fingerprint reference signal are compared against defined or determined thresholds, such as thresholds based on: frequency responses at respective antennas by performing iFFT / iDFT transformations into a time domain to detect channel impulse responses; signal-to-noise ratios; RSRP values; RSRQ values; and other metrics across some or all of the bandwidth of the specific numerology used (e.g., mu1 numerology = 100MHz). The determination (e.g., when the captured value or a derived measurement exceeds a maximum threshold, or when the captured value or a derived measurement does not meet a minimum threshold) can be used to trigger a network adjustment at operation 1540. This network adjustment may include adjusting or modifying the DU, to attempt to mitigate the integrity issue(s) detected within the network.

Examples of thresholds may specifically relate to data provided from measurements of one or more of: Amplitude; Noise Level; Power Levels; and other coarse or fine-grained detectable network parameters. Mitigation examples may include one or more of the following approaches: increasing periodicity; taking one or more antennas offline; adjusting the DU power; adjusting the UE power; adjusting the modulation and coding scheme (MCS) used in the network; or adjusting a time division duplex (TDD) pattern. Threshold values and changes that are evaluated may correspond to percentage changes, absolute or relative value changes, or changes in compliance with dynamic ranges.

In further examples, AI processing operations are performed on an FRU dataset to sort through, process, and act on FRU response information that contains measurements such as BLER, SNR, RSRP, RSRQ, etc. The AI processing results may be used to identify or trigger live (e.g., real-time, or dynamic) adjustments to the DU to mitigate integrity issues. Such adjustments include but are not limited to: MCS level changes, periodicity of reference signal adjustments, RU compression rates, or other changes that can cause an adjustment to network operations.

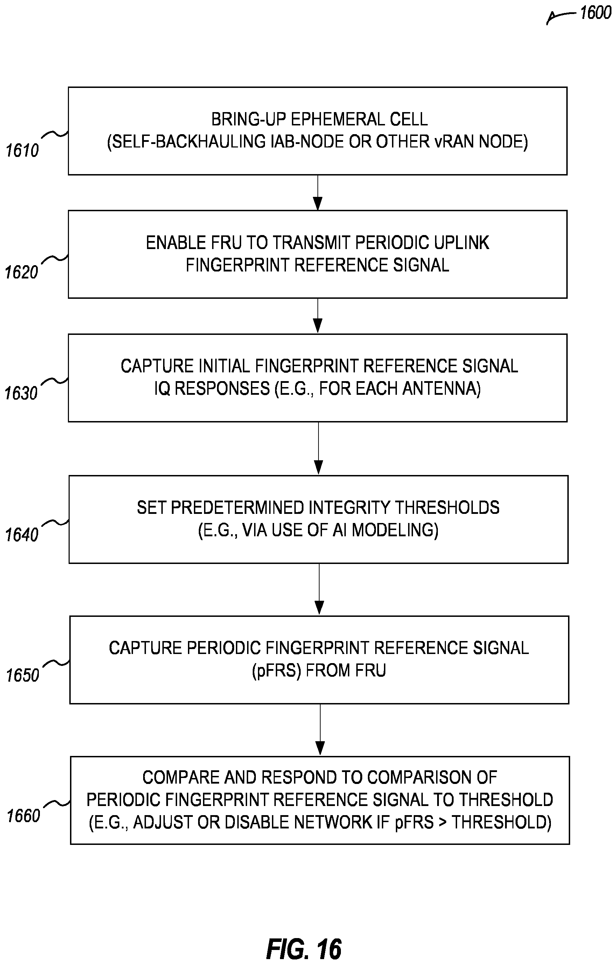

FIG. 16 depicts a flowchart 1600 of an example data processing workflow for the analysis of IQ fingerprint data, with use of an initial "fingerprint" data value established for the 5G network. Other operations, not shown in the flowchart, may include dynamically adjusting or updating the fingerprint data values.

Operation 1610: Bring-up (e.g., initiate and cause operation of) an ephemeral 5G cell (such as self-backhauling IAB-Node or another vRAN Node).

Operation 1620: Enable one or more FRU(s) to transmit a periodic uplink Fingerprint Reference Signal (FRS).

Operation 1630: Capture an initial Fingerprint Reference Signal (iFRS), based on IQ responses for respective antennas to the uplink FRS. This iFRS may be periodically reset or re-established.

Operation 1640: Set predetermined integrity thresholds, which indicate normal and abnormal operational data values. These integrity thresholds may be set via the use of rules, AI modeling, or other variable outcomes.

Operation 1650: Capture a periodic FRS (pFRS) from the one or more FRU devices.

Operation 1660: Compare and respond to an evaluation of pFRS to a defined threshold value or data set (e.g., a threshold comparison, which may be dynamically adapted over time). If the evaluation indicates that the pFRS measurement does not meet a minimum threshold, and/or the evaluation indicates that the pFRS measurement exceeds a maximum threshold, then network changes may be made. This may include adjusting or disabling a component of a network based on the comparison of the pFRS to the threshold.

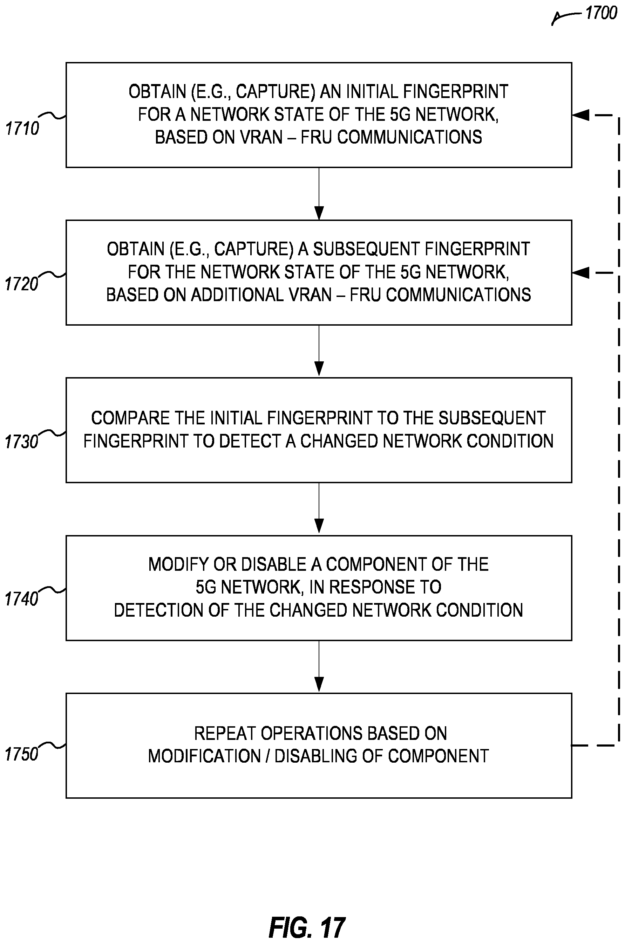

FIG. 17 depicts a flowchart 1700 of an example method for implementing and operating a vRAN based on IQ fingerprint data.

Operation 1710 includes obtaining (e.g., capturing) data from an initial fingerprint, which indicates a network state of the 5G network. As discussed herein, this initial fingerprint may be based on communications between a vRAN node and an FRU connected to the vRAN node. In some examples, the obtaining of the initial fingerprint includes capturing the initial fingerprint in response to starting network operations at the vRAN node.

Operation 1720 includes obtaining (e.g., capturing) a subsequent fingerprint for the network state of the 5G network, based on additional (e.g., subsequent) vRAN - FRU communications. As discussed herein, the initial fingerprint and the subsequent fingerprint may be based on IQ data captured from a reference signal, such as based on a reference signal that is transmitted from the FRU to the vRAN node. Further, the reference signal may be an uplink sounding reference signal (SRS), where the IQ data includes data captured from respective antennas (e.g., each antenna) of the vRAN node.

Operation 1730 includes comparing the initial fingerprint to a subsequent fingerprint of the network state between the vRAN node and the FRU to detect a changed network condition. In a further example, the comparing includes comparing values associated with at least one of: a frequency response associated with channel impulse responses; a signal-to-noise ratio; a RSRP value; or a RSRQ value.

Also in a further example, the comparing of the initial fingerprint to the subsequent fingerprint includes comparison of a measured value to a threshold. For instance, the threshold may be determined based on use of a trained model, and additionally, the action at the vRAN node may be determined based on use of the trained model (or another trained model). For instance, the threshold may be based on signal measurements of at least one of: amplitude, noise level, or power level.

Operation 1740 includes performing an action at the vRAN node, to modify or disable a component of the 5G network. This action may be initiated and performed in response to detection of the changed network condition. In an example, the action at the vRAN node to modify or disable the component of the 5G network includes to perform at least one of: causing an adjustment of power at a distributed unit (DU) of the vRAN node; causing an adjustment of power at a user equipment (UE) wirelessly connected to the vRAN node; changing a Modulation and Coding Scheme (MCS) level; changing a time division duplex (TDD) pattern of the vRAN node; changing a compression rate of a radio unit of the vRAN node; or disabling at least one antenna of the vRAN node.

Operation 1750 includes repeating operations based on the modification or disabling of a network component. For example, the modification of a component may be followed by obtaining additional subsequent fingerprints starting at operation 1720, to determine if change in the network condition has resolved or improved. If a component is disabled, or if a significant modification has occurred, then operations may be performed starting at 1710 to obtain a new initial fingerprint.

### Implementation in Edge Computing Scenarios

It will be understood that the present communication and networking arrangements may be implemented with many aspects of edge computing strategies and deployments. Edge computing, at a general level, refers to the transition of compute and storage resources closer to endpoint devices (e.g., consumer computing devices, user equipment, etc.) in order to optimize total cost of ownership, reduce application latency, improve service capabilities, and improve compliance with security or data privacy requirements. Edge computing may, in some scenarios, provide a cloud-like distributed service that offers orchestration and management for applications among many types of storage and compute resources. As a result, some implementations of edge computing have been referred to as the "edge cloud" or the "fog", as powerful computing resources previously available only in large remote data centers are moved closer to endpoints and made available for use by consumers at the "edge" of the network.

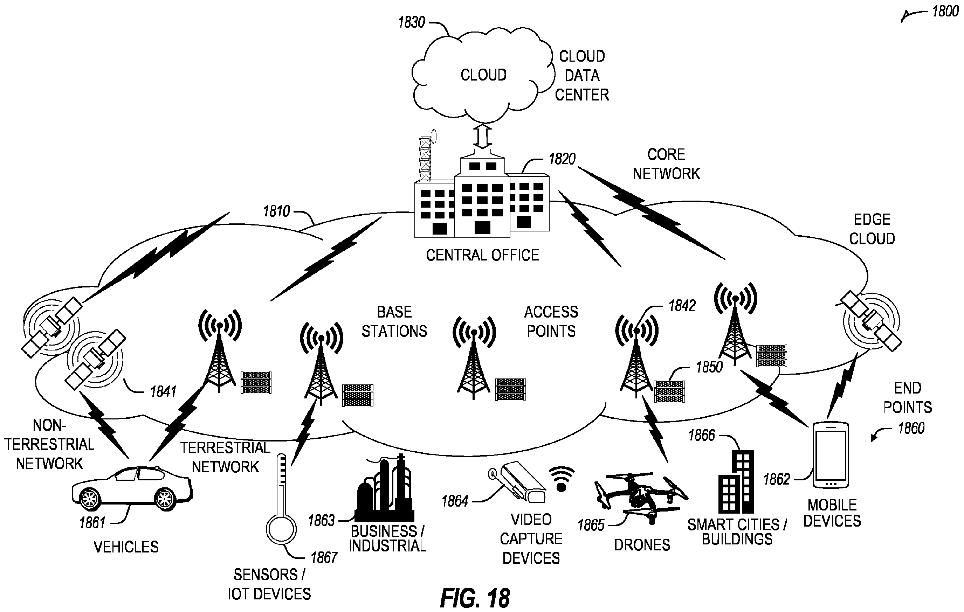

FIG. 18 is a block diagram 1800 showing an overview of a configuration for edge computing, which includes a layer of processing referenced in many of the current examples as an "edge cloud". This network topology, which may include a number of conventional networking layers (including those not shown herein), may be extended through use of the satellite and non-terrestrial network communication arrangements discussed herein.

As shown, the edge cloud 1810 is co-located at an edge location, such as a satellite vehicle 1841, a base station 1842, a local processing hub 1850, or a central office 1820, and thus may include multiple entities, devices, and equipment instances. The edge cloud 1810 is located much closer to the endpoint (consumer and producer) data sources 1860 (e.g., autonomous vehicles 1861, user equipment 1862, business and industrial equipment 1863, video capture devices 1864, drones 1865, smart cities and building devices 1866, sensors and IoT devices 1867, etc.) than the cloud data center 1830. Compute, memory, and storage resources which are offered at the edges in the edge cloud 1810 are critical to providing ultra-low or improved latency response times for services and functions used by the endpoint data sources 1860 as well as reduce network backhaul traffic from the edge cloud 1810 toward cloud data center 1830 thus improving energy consumption and overall network usages among other benefits.

Compute, memory, and storage are scarce resources, and generally decrease depending on the edge location (e.g., fewer processing resources being available at consumer end point devices than at a base station or at a central office). However, the closer that the edge location is to the endpoint (e.g., UEs), the more that space and power is constrained. Thus, edge computing, as a general design principle, attempts to minimize the amount of resources needed for network services, through the distribution of more resources which are located closer both geographically and in network access time. In scenario of a non-terrestrial network, distance and latency may be far to and from the satellite, but data processing may be better accomplished at edge computing hardware in the satellite vehicle rather than requiring additional data connections and network backhaul to and from the cloud.

In an example, an edge cloud architecture extends beyond typical deployment limitations to address restrictions that some network operators or service providers may have in their own infrastructures. These include, variation of configurations based on the edge location (because edges at a base station level, for instance, may have more constrained performance); configurations based on the type of compute, memory, storage, fabric, acceleration, or like resources available to edge locations, tiers of locations, or groups of locations; the service, security, and management and orchestration capabilities; and related objectives to achieve usability and performance of end services.

Edge computing is a developing paradigm where computing is performed at or closer to the "edge" of a network, typically through the use of a compute platform implemented at base stations, gateways, network routers, or other devices which are much closer to end point devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with compute hardware that performs virtualized network functions and offers compute resources for the execution of services and consumer functions for connected devices. Likewise, within edge computing deployments, there may be scenarios in services which the compute resource may be "moved" to the data, as well as scenarios in which the data may be "moved" to the compute resource. Or as an example, base station (or satellite vehicle) compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

In contrast to the network architecture of FIG. 18, traditional endpoint (e.g., UE, vehicle-to-vehicle (V2V), vehicle-to-everything (V2X), etc.) applications are reliant on local device or remote cloud data storage and processing to exchange and coordinate information. A cloud data arrangement allows for long-term data collection and storage, but is not optimal for highly time varying data, such as a collision, traffic light change, etc. and may fail in attempting to meet latency challenges. The extension of satellite capabilities within an edge computing network provides even more possible permutations of managing compute, data, bandwidth, resources, service levels, and the like.

Depending on the real-time requirements in a communications context, a hierarchical structure of data processing and storage nodes may be defined in an edge computing deployment. For example, such a deployment may include local ultra-low-latency processing, regional storage and processing as well as remote cloud data center based storage and processing. Key performance indicators (KPIs) may be used to identify where sensor data is appropriately transferred and where it is processed or stored. This typically depends on the ISO layer dependency of the data. For example, lower layer (PHY, MAC, routing, etc.) data typically changes quickly and is better handled locally in order to meet latency requirements. Higher layer data such as Application Layer data is typically less time critical and may be stored and processed in a remote cloud data center.

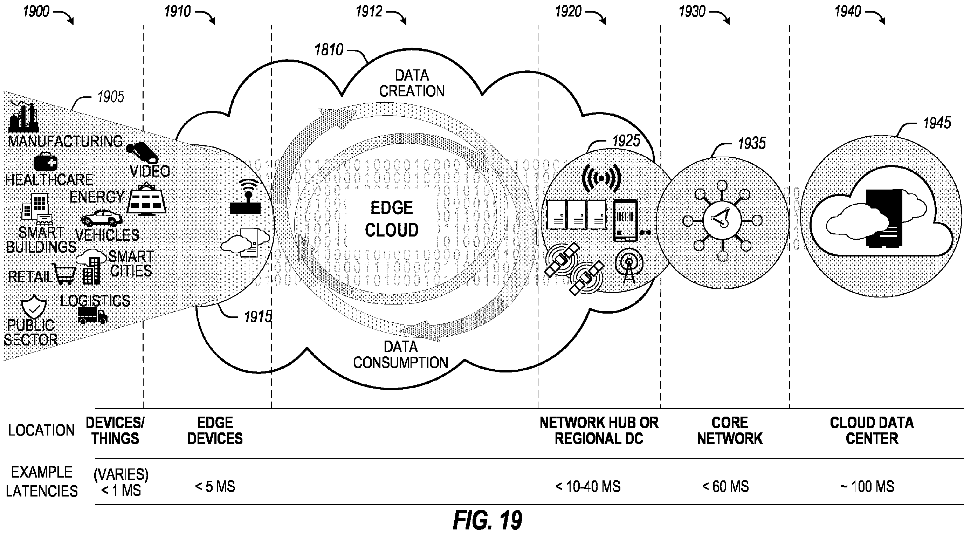

FIG. 19 illustrates operational layers among endpoints, an edge cloud, and cloud computing environments. Specifically, FIG. 19 depicts examples of computational use cases 1905, utilizing the edge cloud 1810 among multiple illustrative layers of network computing. The layers begin at an endpoint (devices and things) layer 1900, which accesses the edge cloud 1810 to conduct data creation, analysis, and data consumption activities. The edge cloud 1810 may span multiple network layers, such as an edge devices layer 1910 having gateways, on-premise servers, or network equipment (nodes 1915) located in physically proximate edge systems; a network access layer 1920, encompassing base stations, radio processing units, network hubs, regional data centers (DC), or local network equipment (equipment 1925); and any equipment, devices, or nodes located therebetween (in layer 1912, not illustrated in detail). The network communications within the edge cloud 1810 and among the various layers may occur via any number of wired or wireless mediums, including via connectivity architectures and technologies not depicted.

Examples of latency with terrestrial networks, resulting from network communication distance and processing time constraints, may range from less than a millisecond (ms) when among the endpoint layer 1900, under 5 ms at the edge devices layer 1910, to even between 10 to 40 ms when communicating with nodes at the network access layer 1920. (Variation to these latencies is expected with use of non-terrestrial networks). Beyond the edge cloud 1810 are core network and cloud data center layers 1930 and 1940, with increasing latency (e.g., between 50-60 ms at the core network layer 1930, to 100 or more ms at the cloud data center layer). As a result, operations at a core network data center 1935 or a cloud data center 1945, with latencies of at least 50 to 100 ms or more, will not be able to accomplish many time-critical functions of the use cases 1905. These latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 1935 or a cloud data center 1945, a central office or content data network may be considered as being located within a "near edge" layer ("near" to the cloud, having high latency values when communicating with the devices and endpoints of the use cases 1905), whereas an access point, base station, on-premise server, or network gateway may be considered as located within a "far edge" layer ("far" from the cloud, having low latency values when communicating with the devices and endpoints of the use cases 1905). It will be understood that other categorizations of a particular network layer as constituting a "close", "local", "near", "middle", or "far" edge may be based on latency, distance, number of network hops, or other measurable characteristics, as measured from a source in any of the network layers 1900-1940.

The various use cases 1905 may access resources under usage pressure from incoming streams, due to multiple services utilizing the edge cloud. To achieve results with low latency, the services executed within the edge cloud 1810 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at a respective layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement operations to remediate.

Thus, with these variations and service features in mind, edge computing within the edge cloud 1810 may provide the ability to serve and respond to multiple applications of the use cases 1905 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), etc.), which might not leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power uses greater memory bandwidth. Likewise, improved security of hardware and root of trust trusted functions are also implicated, because edge locations may be unmanned and may even need permissioned access (e.g., when housed in a third-party location). Such issues are magnified in the edge cloud 1810 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 1810 (network layers 1900-1940), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), communication services provider (CoSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, circuitry, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 1810.

As such, the edge cloud 1810 is formed from network components and functional features operated by and within edge gateway nodes, edge aggregation nodes, or other edge compute nodes among network layers 1910-1930. The edge cloud 1810 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 1810 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

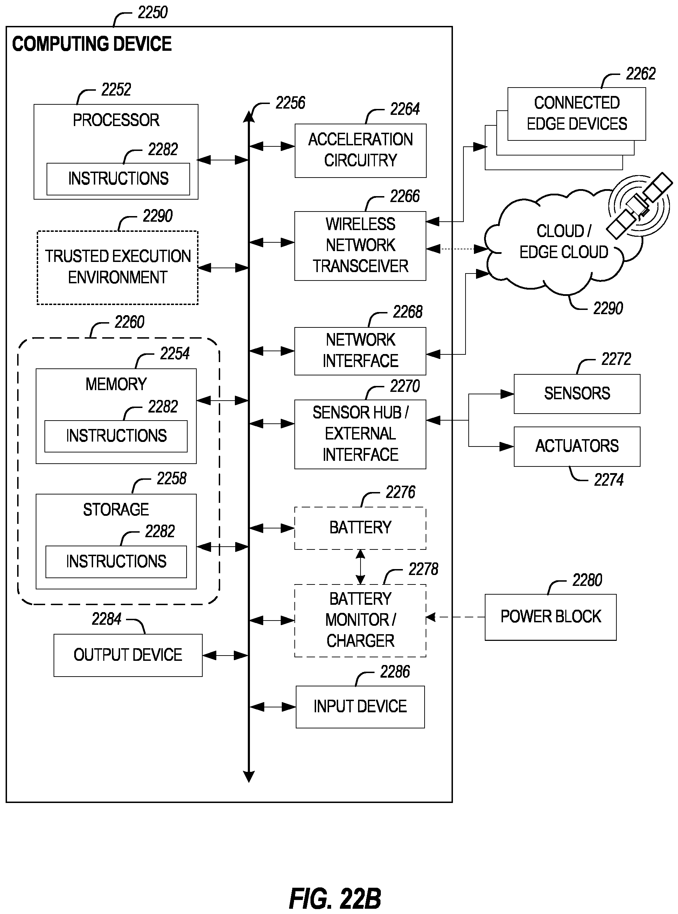

The network components of the edge cloud 1810 may be servers, multi-tenant servers, appliance computing devices, and/or any other type of computing devices. For example, a node of the edge cloud 1810 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 22B. The edge cloud 1810 may also include one or more servers and/or one or more multi-tenant servers. Such a server may include an operating system and implement a virtual computing environment. A virtual computing environment may include a hypervisor managing (e.g., spawning, deploying, shutting down, etc.) one or more virtual machines, one or more containers, etc. Such virtual computing environments provide an execution environment in which one or more applications and/or other software, code or scripts may execute while being isolated from one or more other applications, software, code or scripts.

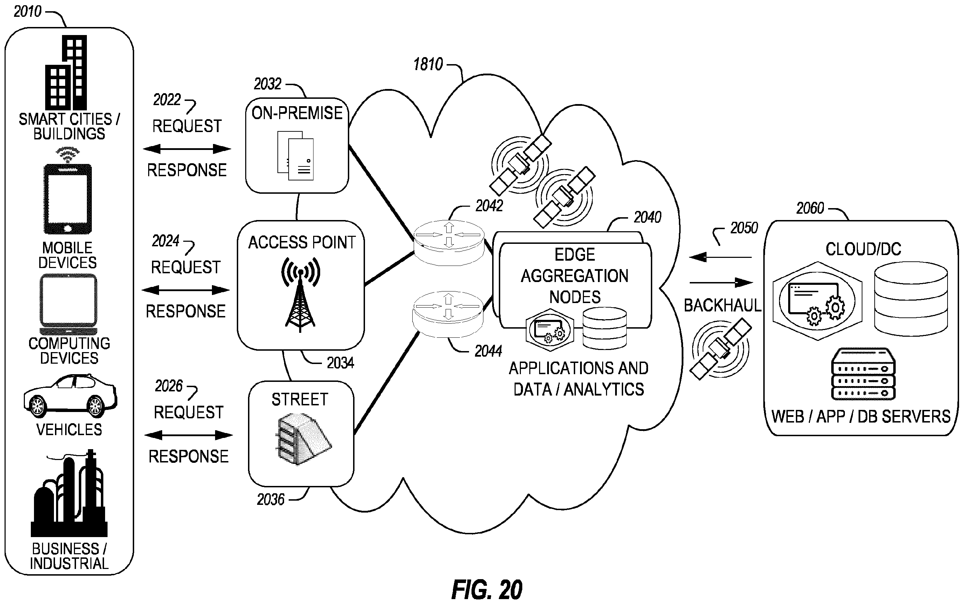

In FIG. 20, various client endpoints 2010 (in the form of mobile devices, computers, autonomous vehicles, business computing equipment, industrial processing equipment) exchange requests and responses that are specific to the type of endpoint network aggregation. For instance, client endpoints 2010 may obtain network access via a wired broadband network, by exchanging requests and responses 2022 through an on-premise network system 2032. Some client endpoints 2010, such as mobile computing devices, may obtain network access via a wireless broadband network, by exchanging requests and responses 2024 through an access point (e.g., cellular network tower) 2034. Some client endpoints 2010, such as autonomous vehicles may obtain network access for requests and responses 2026 via a wireless vehicular network through a street-located network system 2036. However, regardless of the type of network access, the TSP may deploy aggregation points 2042, 2044 within the edge cloud 1810 to aggregate traffic and requests. Thus, within the edge cloud 1810, the TSP may deploy various compute and storage resources, such as at edge aggregation nodes 2040 (including those located at satellite vehicles), to provide requested content. The edge aggregation nodes 2040 and other systems of the edge cloud 1810 are connected to a cloud or data center 2060, which uses a backhaul network 2050 (such as a satellite backhaul) to fulfill higher-latency requests from a cloud/data center for websites, applications, database servers, etc. Additional or consolidated instances of the edge aggregation nodes 2040 and the aggregation points 2042, 2044, including those deployed on a single server framework, may also be present within the edge cloud 1810 or other areas of the TSP infrastructure.

At a more generic level, an edge computing system may be described to encompass any number of deployments operating in the edge cloud 1810, which provide coordination from client and distributed computing devices. FIG. 19 provides a further abstracted overview of layers of distributed compute deployed among an edge computing environment for purposes of illustration.

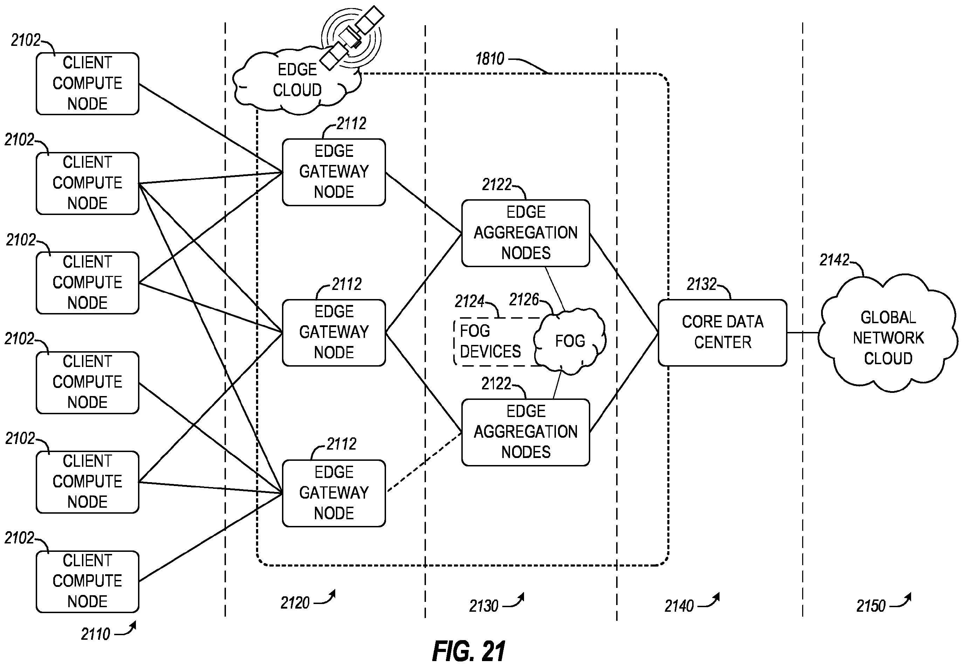

FIG. 21 generically depicts an edge computing system for providing edge services and applications to multi-stakeholder entities, as distributed among one or more client compute nodes 2102, one or more edge gateway nodes 2112, one or more edge aggregation nodes 2122, one or more core data centers 2132, and a global network cloud 2142, as distributed across layers of the network. The implementation of the edge computing system may be provided at or on behalf of a telecommunication service provider ("telco", or "TSP"), internet-of-things service provider, cloud service provider (CSP), enterprise entity, or any other number of entities.

A respective node or device of the edge computing system is located at a particular layer corresponding to layers 1900, 1910, 1920, 1930, 1940. For example, the client compute nodes 2102 are respectively located at an endpoint layer 1900, while the edge gateway nodes 2112 are respectively located at an edge devices layer 1910 (local level) of the edge computing system. Additionally, the edge aggregation nodes 2122 (and/or fog devices 2124, if arranged or operated with or among a fog networking configuration 2126) are located at a network access layer 1920 (an intermediate level). Fog computing (or "fogging") generally refers to extensions of cloud computing to the edge of an enterprise's network, typically in a coordinated distributed or multi-node network. Some forms of fog computing provide the deployment of compute, storage, and networking services between end devices and cloud computing data centers, on behalf of the cloud computing locations. Such forms of fog computing provide operations that are consistent with edge computing as discussed herein; many of the edge computing aspects discussed herein are applicable to fog networks, fogging, and fog configurations. Further, aspects of the edge computing systems discussed herein may be configured as a fog, or aspects of a fog may be integrated into an edge computing architecture.

The core data center 2132 is located at a core network layer 1930 (e.g., a regional or geographically-central level), while the global network cloud 2142 is located at a cloud data center layer 1940 (e.g., a national or global layer). The use of "core" is provided as a term for a centralized network location-deeper in the network-which is accessible by multiple edge nodes or components; however, a "core" does not necessarily designate the "center" or the deepest location of the network. Accordingly, the core data center 2132 may be located within, at, or near the edge cloud 1810.

Although an illustrative number of client compute nodes 2102, edge gateway nodes 2112, edge aggregation nodes 2122, core data centers 2132, global network clouds 2142 are shown in FIG. 21, it should be appreciated that the edge computing system may include more or fewer devices or systems at a respective layer. Additionally, as shown in FIG. 21, the number of components of a respective layer 1900, 1910, 1920, 1930, 1940 generally increases at a lower level (e.g., when moving closer to endpoints). As such, one edge gateway node 2112 may service multiple client compute nodes 2102, and one edge aggregation node 2122 may service multiple edge gateway nodes 2112.

Consistent with the examples provided herein, a respective client compute node 2102 may be embodied as any type of end point component, device, appliance, or "thing" capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 1810.

As such, the edge cloud 1810 is formed from network components and functional features operated by and within the edge gateway nodes 2112 and the edge aggregation nodes 2122 of layers 1920, 1930, respectively. The edge cloud 1810 may be embodied as any type of network that provides edge computing and/or storage resources which are proximately located to radio access network (RAN) capable endpoint devices (e.g., mobile computing devices, IoT devices, smart devices, etc.), which are shown in FIG. 19 as the client compute nodes 2102. In other words, the edge cloud 1810 may be envisioned as an "edge" which connects the endpoint devices and traditional mobile network access points that serves as an ingress point into service provider core networks, including carrier networks (e.g., Global System for Mobile Communications (GSM) networks, Long-Term Evolution (LTE) networks, 5G networks, etc.), while also providing storage and/or compute capabilities. Other types and forms of network access (e.g., Wi-Fi, long-range wireless networks) may also be utilized in place of or in combination with such 3GPP carrier networks.

In some examples, the edge cloud 1810 may form a portion of or otherwise provide an ingress point into or across a fog networking configuration 2126 (e.g., a network of fog devices 2124, not shown in detail), which may be embodied as a system-level horizontal and distributed architecture that distributes resources and services to perform a specific function. For instance, a coordinated and distributed network of fog devices 2124 may perform computing, storage, control, or networking aspects in the context of an IoT system arrangement. Other networked, aggregated, and distributed functions may exist in the edge cloud 1810 between the cloud data center layer 1940 and the client endpoints (e.g., client compute nodes 2102). Some of these are discussed in the following sections in the context of network functions or service virtualization, including the use of virtual edges and virtual services which are orchestrated for multiple stakeholders.

The edge gateway nodes 2112 and the edge aggregation nodes 2122 cooperate to provide various edge services and security to the client compute nodes 2102. Furthermore, because a client compute node 2102 may be stationary or mobile, an edge gateway node 2112 may cooperate with other edge gateway devices to propagate presently provided edge services and security as the corresponding client compute node 2102 moves about a region. To do so, the edge gateway nodes 2112 and/or edge aggregation nodes 2122 may support multiple tenancy and multiple stakeholder configurations, in which services from (or hosted for) multiple service providers and multiple consumers may be supported and coordinated across a single or multiple compute devices.

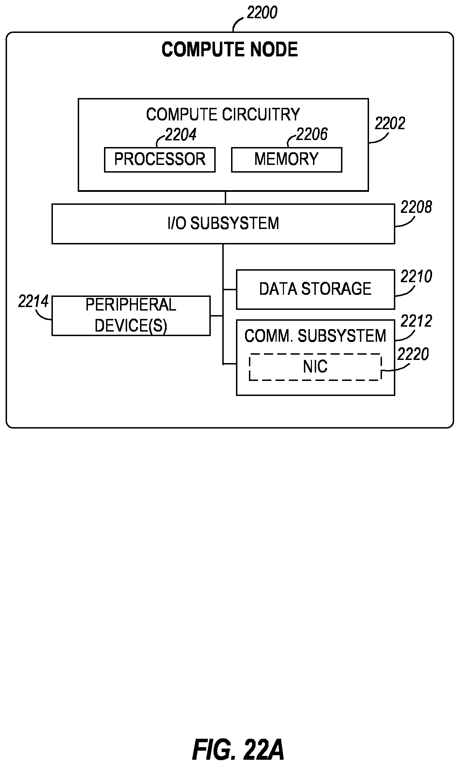

In further examples, any of the compute nodes or devices discussed with reference to the present computing systems and environment may be fulfilled based on the components depicted in FIGS. 22A and 22B. A compute node may be embodied as a type of device, appliance, computer, or other "thing" capable of communicating with other edge, networking, or endpoint components.

In the simplified example depicted in FIG. 22A, an edge compute node 2200 includes a compute engine (also referred to herein as "compute circuitry") 2202, an input/output (I/O) subsystem 2208, data storage device 2210, communication circuitry 2212, and, optionally, one or more peripheral devices 2214. In other examples, a compute device may include other or additional components, such as those used in personal or server computing systems (e.g., a display, peripheral devices, etc.). Additionally, in some examples, one or more of the illustrative components may be incorporated in, or otherwise form a portion of, another component.

The compute node 2200 may be embodied as any type of engine, device, or collection of devices capable of performing various compute functions. In some examples, the compute node 2200 may be embodied as a single device such as an integrated circuit, an embedded system, a field-programmable gate array (FPGA), a system-on-a-chip (SOC), or other integrated system or device. In the illustrative example, the compute node 2200 includes or is embodied as a processor 2204 and a memory 2206. The processor 2204 may be embodied as any type of processor capable of performing the functions described herein (e.g., executing an application). For example, the processor 2204 may be embodied as a multi-core processor(s), a microcontroller, or other processor or processing/controlling circuit. In some examples, the processor 2204 may be embodied as, include, or be coupled to an FPGA, an application specific integrated circuit (ASIC), reconfigurable hardware or hardware circuitry, or other specialized hardware to facilitate performance of the functions described herein.

The main memory 2206 may be embodied as any type of volatile (e.g., dynamic random access memory (DRAM), etc.) or non-volatile memory or data storage capable of performing the functions described herein. Volatile memory may be a storage medium that uses power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In one example, the memory device is a block addressable memory device, such as those based on NAND or NOR technologies. A memory device may also include a three-dimensional crosspoint memory device (e.g., Intel 3D XPoint^{™} memory, other storage class memory), or other byte addressable write-in-place nonvolatile memory devices. The memory device may refer to the die itself and/or to a packaged memory product. In some examples, 3D crosspoint memory (e.g., Intel 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the main memory 2206 may be integrated into the processor 2204. The main memory 2206 may store various software and data used during operation such as one or more applications, data operated on by the application(s), libraries, and drivers.

The compute circuitry 2202 is communicatively coupled to other components of the compute node 2200 via the I/O subsystem 2208, which may be embodied as circuitry and/or components to facilitate input/output operations with the compute circuitry 2202 (e.g., with the processor 2204 and/or the main memory 2206) and other components of the compute circuitry 2202. For example, the I/O subsystem 2208 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 2208 may form a portion of a system-on-a-chip (SoC) and be incorporated, along with one or more of the processor 2204, the main memory 2206, and other components of the compute circuitry 2202, into the compute circuitry 2202.

The one or more illustrative data storage devices 2210 may be embodied as any type of devices configured for short-term or long-term storage of data such as, for example, memory devices and circuits, memory cards, hard disk drives, solid-state drives, or other data storage devices. A data storage device 2210 may include a system partition that stores data and firmware code for the data storage device 2210. A data storage device 2210 may also include one or more operating system partitions that store data files and executables for operating systems depending on, for example, the type of compute node 2200.

The communication circuitry 2212 may be embodied as any communication circuit, device, or collection thereof, capable of enabling communications over a network between the compute circuitry 2202 and another compute device (e.g., an edge gateway node 2112 of an edge computing system). The communication circuitry 2212 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, etc.) to effect such communication.

The illustrative communication circuitry 2212 includes a network interface controller (NIC) 2220, which may also be referred to as a host fabric interface (HFI). The NIC 2220 may be embodied as one or more add-in-boards, daughter cards, network interface cards, controller chips, chipsets, or other devices that may be used by the compute node 2200 to connect with another compute device (e.g., an edge gateway node 2112). In some examples, the NIC 2220 may be embodied as part of a system-on-a-chip (SoC) that includes one or more processors, or included on a multichip package that also contains one or more processors. In some examples, the NIC 2220 may include a local processor (not shown) and/or a local memory (not shown) that are both local to the NIC 2220. In such examples, the local processor of the NIC 2220 may be capable of performing one or more of the functions of the compute circuitry 2202 described herein. Additionally or alternatively, in such examples, the local memory of the NIC 2220 may be integrated into one or more components of the client compute node at the board level, socket level, chip level, and/or other levels.

Additionally, in some examples, a compute node 2200 may include one or more peripheral devices 2214. Such peripheral devices 2214 may include any type of peripheral device found in a compute device or server such as audio input devices, a display, other input/output devices, interface devices, and/or other peripheral devices, depending on the particular type of the compute node 2200. In further examples, the compute node 2200 may be embodied by a respective edge compute node in an edge computing system (e.g., client compute node 2102, edge gateway node 2112, edge aggregation node 2122) or like forms of appliances, computers, subsystems, circuitry, or other components.

In a more detailed example, FIG. 22B illustrates a block diagram of an example of components that may be present in an edge computing node 2250 for implementing the techniques (e.g., operations, processes, methods, and methodologies) described herein. The edge computing node 2250 may include any combinations of the components referenced above, and it may include any device usable with an edge communication network or a combination of such networks. The components may be implemented as ICs, portions thereof, discrete electronic devices, or other modules, logic, hardware, software, firmware, or a combination thereof adapted in the edge computing node 2250, or as components otherwise incorporated within a chassis of a larger system. Further, to support the security examples provided herein, a hardware RoT (e.g., provided according to a DICE architecture) may be implemented in an IP block of the edge computing node 2250 such that any IP Block may boot into a mode where a RoT identity may be generated that may attest its identity and its current booted firmware to another IP Block or to an external entity.

The edge computing node 2250 may include processing circuitry in the form of a processor 2252, which may be a microprocessor, a multi-core processor, a multithreaded processor, an ultra-low voltage processor, an embedded processor, or other known processing elements. The processor 2252 may be a part of a system on a chip (SoC) in which the processor 2252 and other components are formed into a single integrated circuit, or a single package, such as the Edison^{™} or Galileo^{™} SoC boards from Intel Corporation, Santa Clara, California. As an example, the processor 2252 may include an Intel^{®} Architecture Core^{™} based processor, such as a Quark^{™}, an Atom^{™}, a Xeon^{™}, an i3, an i5, an i7, an i9, or an MCU-class processor, or another such processor available from Intel^{®}. However, any number other processors may be used, such as available from Advanced Micro Devices, Inc. (AMD) of Sunnyvale, California, a MIPS-based design from MIPS Technologies, Inc. of Sunnyvale, California, an ARM-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc.

The processor 2252 may communicate with a system memory 2254 over an interconnect 2256 (e.g., a bus). Any number of memory devices may be used to provide for a given amount of system memory. As examples, the memory may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 2258 may also couple to the processor 2252 via the interconnect 2256. In an example, the storage 2258 may be implemented via a solid-state disk drive (SSDD). Other devices that may be used for the storage 2258 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magneto-resistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 2258 may be on-die memory or registers associated with the processor 2252. However, in some examples, the storage 2258 may be implemented using a micro hard disk drive (HDD). Further, any number of new technologies may be used for the storage 2258 in addition to, or instead of, the technologies described, such resistance change memories, phase change memories, holographic memories, or chemical memories, among others.

The components may communicate over the interconnect 2256. The interconnect 2256 may include any number of technologies, including industry standard architecture (ISA), extended ISA (EISA), peripheral component interconnect (PCI), peripheral component interconnect extended (PCIx), PCI express (PCIe), NVLink, or any number of other technologies. The interconnect 2256 may be a proprietary bus, for example, used in an SoC based system. Other bus systems may be included, such as an I2C interface, an SPI interface, point to point interfaces, and a power bus, among others.

The interconnect 2256 may couple the processor 2252 to a transceiver 2266, for communications with the connected edge devices 2262. The transceiver 2266 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 2262. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 2266 (or multiple transceivers) may communicate using multiple standards or radios for communications at a different range. For example, the edge computing node 2250 may communicate with close devices, e.g., within about 10 meters, using a local transceiver based on BLE, or another low power radio, to save power. More distant connected edge devices 2262, e.g., within about 50 meters, may be reached over ZigBee or other intermediate power radios. Both communications techniques may take place over a single radio at different power levels or may take place over separate transceivers, for example, a local transceiver using BLE and a separate mesh transceiver using ZigBee.

A wireless network transceiver 2266 (e.g., a radio transceiver) may be included to communicate with devices or services in the edge cloud 2290 via local or wide area network protocols. The wireless network transceiver 2266 may be an LPWA transceiver that follows the IEEE 802.15.4, or IEEE 802.15.4g standards, among others. The edge computing node 2250 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 2266, as described herein. For example, the transceiver 2266 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 2266 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 2268 may be included to provide a wired communication to nodes of the edge cloud 2290 or to other devices, such as the connected edge devices 2262 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 2268 may be included to enable connecting to a second network, for example, a first NIC 2268 providing communications to the cloud over Ethernet, and a second NIC 2268 providing communications to other devices over another type of network.

Given the variety of types of applicable communications from the device to another component or network, applicable communications circuitry used by the device may include or be embodied by any one or more of components provided by acceleration circuitry 2264, wireless network transceiver 2266, NIC 2268, or interface 2270. Accordingly, in various examples, applicable means for communicating (e.g., receiving, transmitting, etc.) may be embodied by such communications circuitry.

The edge computing node 2250 may include or be coupled to acceleration circuitry 2264, which may be embodied by one or more AI accelerators, a neural compute stick, neuromorphic hardware, an FPGA, an arrangement of GPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. Accordingly, in various examples, applicable means for acceleration may be embodied by such acceleration circuitry.

The interconnect 2256 may couple the processor 2252 to a sensor hub or external interface 2270 that is used to connect additional devices or subsystems. The devices may include sensors 2272, such as accelerometers, level sensors, flow sensors, optical light sensors, camera sensors, temperature sensors, a global positioning system (GPS) sensors, pressure sensors, barometric pressure sensors, and the like. The hub or interface 2270 further may be used to connect the edge computing node 2250 to actuators 2274, such as power switches, valve actuators, an audible sound generator, a visual warning device, and the like.

In some optional examples, various input/output (I/O) devices may be present within or connected to, the edge computing node 2250. For example, a display or other output device 2284 may be included to show information, such as sensor readings or actuator position. An input device 2286, such as a touch screen or keypad may be included to accept input. An output device 2284 may include any number of forms of audio or visual display, including simple visual outputs such as binary status indicators (e.g., LEDs) and multi-character visual outputs, or more complex outputs such as display screens (e.g., LCD screens), with the output of characters, graphics, multimedia objects, and the like being generated or produced from the operation of the edge computing node 2250.

A battery 2276 may power the edge computing node 2250, although, in examples in which the edge computing node 2250 is mounted in a fixed location, it may have a power supply coupled to an electrical grid. The battery 2276 may be a lithium ion battery, or a metal-air battery, such as a zinc-air battery, an aluminum-air battery, a lithium-air battery, and the like.

A battery monitor/charger 2278 may be included in the edge computing node 2250 to track the state of charge (SoCh) of the battery 2276. The battery monitor/charger 2278 may be used to monitor other parameters of the battery 2276 to provide failure predictions, such as the state of health (SoH) and the state of function (SoF) of the battery 2276. The battery monitor/charger 2278 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 2278 may communicate the information on the battery 2276 to the processor 2252 over the interconnect 2256. The battery monitor/charger 2278 may also include an analog-to-digital (ADC) converter that enables the processor 2252 to directly monitor the voltage of the battery 2276 or the current flow from the battery 2276. The battery parameters may be used to determine actions that the edge computing node 2250 may perform, such as transmission frequency, mesh network operation, sensing frequency, and the like.

A power block 2280, or other power supply coupled to a grid, may be coupled with the battery monitor/charger 2278 to charge the battery 2276. In some examples, the power block 2280 may be replaced with a wireless power receiver to obtain the power wirelessly, for example, through a loop antenna in the edge computing node 2250. A wireless battery charging circuit, such as an LTC4020 chip from Linear Technologies of Milpitas, California, among others, may be included in the battery monitor/charger 2278. The specific charging circuits may be selected based on the size of the battery 2276, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 2258 may include instructions 2282 in the form of software, firmware, or hardware commands to implement the techniques described herein. Although such instructions 2282 are shown as code blocks included in the memory 2254 and the storage 2258, it may be understood that any of the code blocks may be replaced with hardwired circuits, for example, built into an application specific integrated circuit (ASIC).

In an example, the instructions 2282 provided via the memory 2254, the storage 2258, or the processor 2252 may be embodied as a non-transitory, machine-readable medium 2260 including code to direct the processor 2252 to perform electronic operations in the edge computing node 2250. The processor 2252 may access the non-transitory, machine-readable medium 2260 over the interconnect 2256. For instance, the non-transitory, machine-readable medium 2260 may be embodied by devices described for the storage 2258 or may include specific storage units such as optical disks, flash drives, or any number of other hardware devices. The non-transitory, machine-readable medium 2260 may include instructions to direct the processor 2252 to perform a specific sequence or flow of actions, for example, as described with respect to the flowchart(s) and block diagram(s) of operations and functionality depicted above. As used in, the terms "machine-readable medium" and "computer-readable medium" are interchangeable.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

The block diagrams of FIGS. 22A and 22B are intended to depict a high-level view of components of a device, subsystem, or arrangement of an edge computing node. However, it will be understood that some of the components shown may be omitted, additional components may be present, and a different arrangement of the components shown may occur in other implementations.

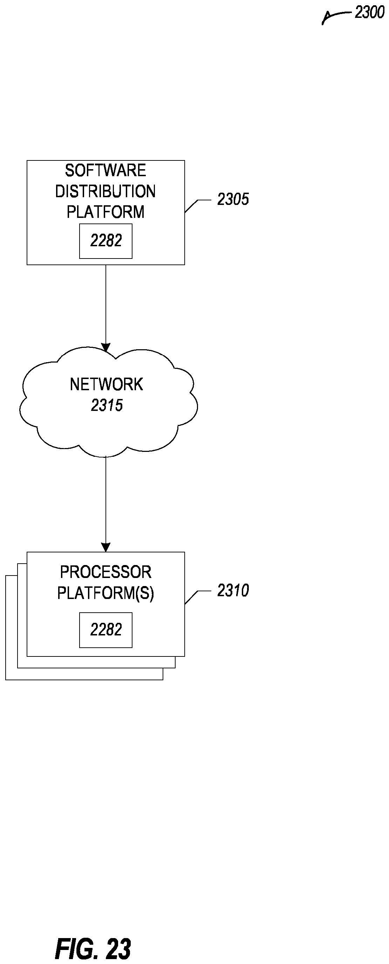

FIG. 23 illustrates an example software distribution platform 2305 to distribute software, such as the example computer readable instructions 2282 of FIG. 22B, to one or more devices, such as example processor platform(s) 2310 and/or other example connected edge devices or systems discussed herein. The example software distribution platform 2305 may be implemented by any computer server, data facility, cloud service, etc., capable of storing and transmitting software to other computing devices. Example connected edge devices may be customers, clients, managing devices (e.g., servers), third parties (e.g., customers of an entity owning and/or operating the software distribution platform 2305). Example connected edge devices may operate in commercial and/or home automation environments. In some examples, a third party is a developer, a seller, and/or a licensor of software such as the example computer readable instructions 2282 of FIG. 22B. The third parties may be consumers, users, retailers, OEMs, etc. that purchase and/or license the software for use and/or re-sale and/or sub-licensing. In some examples, distributed software causes display of one or more user interfaces (UIs) and/or graphical user interfaces (GUIs) to identify the one or more devices (e.g., connected edge devices) geographically and/or logically separated from each other (e.g., physically separated IoT devices chartered with the responsibility of water distribution control (e.g., pumps), electricity distribution control (e.g., relays), etc.).

In the illustrated example of FIG. 23, the software distribution platform 2305 includes one or more servers and one or more storage devices that store the computer readable instructions 2282. The one or more servers of the example software distribution platform 2305 are in communication with a network 2315, which may correspond to any one or more of the Internet and/or any of the example networks described above. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 2282 from the software distribution platform 2305. For example, the software, which may correspond to example computer readable instructions, may be downloaded to the example processor platform(s), which is/are to execute the computer readable instructions 2282. In some examples, one or more servers of the software distribution platform 2305 are communicatively connected to one or more security domains and/or security devices through which requests and transmissions of the example computer readable instructions 2282 must pass. In some examples, one or more servers of the software distribution platform 2305 periodically offer, transmit, and/or force updates to the software (e.g., the example computer readable instructions 2282 of FIG. 22B) to ensure improvements, patches, updates, etc. are distributed and applied to the software at the end user devices.

In the illustrated example of FIG. 23, the computer readable instructions 2282 are stored on storage devices of the software distribution platform 2305 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions 2282 stored in the software distribution platform 2305 are in a first format when transmitted to the example processor platform(s) 2310. In some examples, the first format is an executable binary in which particular types of the processor platform(s) 2310 can execute. However, in some examples, the first format is uncompiled code that requires one or more preparation tasks to transform the first format to a second format to enable execution on the example processor platform(s) 2310. For instance, the receiving processor platform(s) 2300 may need to compile the computer readable instructions 2282 in the first format to generate executable code in a second format that is capable of being executed on the processor platform(s) 2310. In still other examples, the first format is interpreted code that, upon reaching the processor platform(s) 2310, is interpreted by an interpreter to facilitate execution of instructions.

## Claims

1. A method for backhaul communications used with a radio access network (RAN), performed by processing circuitry of a computing system, the method comprising:
obtaining measurements corresponding to wireless communications of a radio access network (RAN) operating with a backhaul, the measurements based on in-phase and quadrature (IQ) data of the wireless communications;
performing a comparison of the measurements to an expected operational state of the RAN, wherein the expected operational state is established from a baseline of the IQ data in the RAN; and
modifying the wireless communications of the backhaul based on the comparison of the measurements to the expected operational state.

2. The method of claim 1, wherein the wireless communications of the backhaul correspond to communications between an Integrated Access Backhaul (IAB) Donor (IAB-Donor) and an IAB Node (IAB-Node).

3. The method of claim 2, wherein the expected operational state relates to: channel state information (CSI), interference, physical layer statistics, or backhaul access protocol (BAP) health, for a mobile termination (MT) of the IAB-Node.

4. The method of claim 3, wherein modifying the wireless communications of the backhaul includes changing bandwidth allocated to the backhaul to the IAB-Donor with at least one of: use of an alternative channel, use of an alternative radio frame uplink and downlink pattern, or a change in receive/transmit power.

5. The method of claim 2, wherein the expected operational state relates to: channel state information (CSI), interference, or physical layer statistics, for a user equipment (UE) connected to the IAB-Node.

6. The method of claim 5, wherein modifying the wireless communications of the backhaul includes changing bandwidth allocated to the backhaul to the IAB-Node with at least one of: use of an alternative channel, use of an alternative radio frame uplink and downlink pattern, or a change in receive/transmit power.

7. The method of claim 2, wherein the expected operational state relates to: congestion determined from an uplink sounding reference signal (UL SRS) for at least one location-designated user equipment (UE) located between the IAB-Donor and the IAB-Node for respective antennas.

8. The method of claim 7, wherein modifying the wireless communications of the backhaul includes adjusting a time division duplex (TDD) or frequency division duplex (FDD) pattern used in an uplink, a downlink, or both.

9. The method of claim 7, further comprising:
determining a location of another UE, based on measurements relative to the at least one location-designated UE;
wherein determining the location of the another UE is performed by a location service located at the IAB-Donor or the IAB-Node.

10. The method of claim 9, wherein determining the location of the another UE is based on:
determining a sounding reference signal (SRS) channel estimation;
calculating a channel impulse response based on the SRS channel estimation; and
calculating a time of arrival to the another UE using an inflection point method.

11. The method of any of claims 1 to 10, wherein the comparison of the measurements or the expected operational state is based on results inferred from a trained model.

12. A computing system, comprising:
processing circuitry; and
a memory device including instructions embodied thereon, wherein the instructions, which when executed by the processing circuitry, configure the processing circuitry to perform operations that perform the methods of any of claims 1 to 11.

13. At least one machine-readable medium capable of storing instructions, wherein the instructions when executed by at least one processor of a computing device, cause the at least one processor to perform the methods of any of claims 1 to 11.
